# EUROPÄISCHE PATENTSCHRIFT

(11) **EP 3 126 791 B1**
(45) Veröffentlichungstag und Bekanntmachung des Hinweises auf die Patenterteilung: **11.03.2020**
(21) Anmeldenummer: 15717107.5
(22) Anmeldetag: 27.03.2015
(51) Int. Cl.: G01F 11/04

(54) **DOSIERVORRICHTUNG**
DOSING DEVICE
DISPOSITIF DE DOSAGE

(30) Priorität: 31.03.2014 CH 486142014
(43) Veröffentlichungstag der Anmeldung: 08.02.2017
(73) Patentinhaber: Capartis AG, 8200 Schaffhausen (CH)
(72) Erfinder: WOHLGENANNT, Herbert, CH-8200 Schaffhausen (CH)
(74) Vertreter: Dennemeyer & Associates S.A.
(86) Internationale Anmeldenummer: PCT/EP2015/056690
(87) Internationale Veröffentlichungsnummer: WO 2015/150250

(56) Entgegenhaltungen:
- EP-A1- 1 164 362
- FR-A1- 2 591 331
- FR-A1- 2 974 351
- US-A- 3 052 382
- US-A1- 2007 199 957

## Beschreibung

Die Erfindung betrifft eine Dosiervorrichtung, um eine Flüssigkeitszufuhr, sei es aus einem Behälter mit Stutzen, etwa aus einer Kunststoff- oder Pet-Flasche oder aus einem Schlauch mit Stutzen in dosierten Portionen auszugeben.

Dosierverschlüsse oder Vorrichtungen zum dosierten Ausgeben von Flüssigkeiten sind in mehreren Ausführungen bekannt, etwa aus WO 2005/049477 und EP 2 653 842. Die bisher bekannten Dosierverschlüsse oder Dosiervorrichtungen sind allerdings durchwegs aus mehreren Teilen aufgebaut, mindestens aus drei oder sogar weit mehr Teilen. Ausserdem sind gewisse Teile, wie etwa Kugeln und Kugellager als Ventileinrichtungen anspruchsvoll in der Herstellung, und die Einzelteile sind aufwändig in der Montage, das heisst in ihrem Zusammenbau zum fertigen Dosierverschluss. Aus US 2 864 538 ist eine Dosiervorrichtung bekannt, welche auf einen Stutzen eines Behälters aufsetzbar ist. Sie ragt von diesem axial ab und bildet eine zum Beispiel zylindrische oder trommelförmige Dosierkammer von wesentlich grösserem Durchmesser als der Behälterstutzen. Diese Dosierkammer lässt sich axial in zwei Endpositionen verschieben. Bei gestürztem Behälter, also wenn der Stutzen unten liegt, wird die Dosierkammer nach oben geschoben, bis zu ihrem Anschlag, und wird sodann befüllt. Zum Entleeren wird die Dosierkammer nach unten geschoben, zu einem unteren Anschlag, wonach der darin gefangene Inhalt ausgegossen wird. In einer Variante kann die Dosis auch variiert werden, indem die Dosiervorrichtung mehr oder weniger stark verdreht wird, was sich auf das Mass der Befüllung der Dosierkammer auswirkt. Diese Dosiervorrichtung lässt sich allerdings nicht in einen Behälterstutzen oder überhaupt in das Innere des Behälters integrieren, sondern wird immer aussen am Stutzen angebracht. Ausserdem folgt das Dosieren mit zusätzlichen Manipulationen und kann nicht einhändig erfolgen. Der Behälter muss mit gegen den Behälter geschobener Dosierkammer kopfüber gestürzt werden und dann muss die Dosierkammer nach unten geschoben werden, wonach eine Dosis ausfliesst. Man benötigt also unweigerlich beide Hände zum dosierten Ausgiessen.

EP 0 337 778 zeigt einen Flüssigkeitsbehälter mit Dosiersystem, wobei dieses in einem Verschlusselement untergebracht ist und das Verschlusselement den Stutzen des Flüssigkeitsbehälters um ein Mehrfaches der Stutzenlänge überragt. Wenn der Behälter mit seinem Verschlusselement kopfüber gestürzt wird, so strömt eine definierte Dosis aus dem Behälter. Für das Dosieren ist eine Zeitgeberkammer mit einer zylindrischen Innenwand gebildet, und darin ist ein Kolben geführt, der unter dem Einfluss der Schwerkraft aus einer Startposition in eine Endposition abwärts bewegbar ist, wenn der Behälter umgedreht wird. Der Kolben weist einen Zeitgeberflansch auf, der eine verschiebbare Wand der Zeitgeberkammer bildet und sich radial in Bezug auf die ringförmige Wand der Zeitgeberkammer erstreckt und mit dieser in verschiebbarer, abgedichteter Beziehung steht. Er überstreicht somit ein vorgegebenes Volumen, das von der Startposition bis zur Endposition des Kolbens definiert ist und das Volumen der Zeitgeberkammer bildet. Und diese Zeitgeberkammer weist bei gestürztem Flüssigkeitsbehälter, wenn also der Verschluss unten liegt, am dann oberen Ende der Zeitgeberkammer Einlassöffnungen auf, durch welche Fluid in die Zeitgeberkammer einströmen kann. Wenn der Fluidbehälter weiter in gestürzter Lage gehalten wird, so bewegt sich der Kolben aufgrund der Schwerkraft nach abwärts und stoppt zunächst das weitere Zuströmen von Fluid in die Zeitgeberkammer. Während des Abwärtsbewegens des Kolbens wird der Inhalt der Zeitgeberkammer durch die Ausflussöffnungen in den Verschluss entleert und mit Erreichen des unteren Endzustandes des Kolbens werden auch diese Ausflussöffnungen abgedichtet und es fliesst kein Fluid mehr durch den Verschluss. Die Dosis hängt somit von der Zeit ab, innerhalb welcher der Kolben unter der Schwerkraft nach unten verschoben wird. Dieses Verschlusselement mit Dosiersystem ist symmetrisch aufgebaut und funktioniert bei gestürztem Fluidbehälter, aber kaum wenn der Behälter langsam in eine bloss zum Beispiel 45° Ausgiesslage geschwenkt wird. Dann versagt das System, weil der Kolben dann nicht zuverlässig nach unten geschoben wird und zudem auf der dann oberen Seite des Kolbens die dortigen Einlassöffnungen bei teilweise entleertem Fluidbehälter nicht mehr in Flüssigkeit eingetaucht sind. Dieses Dosiersystem setzt also zwingend voraus, dass der Fluidbehälter zügig um 180° kopfüber gestürzt wird, wonach die Zeit bestimmt, wieviel Fluid ausgegossen wird. Fluid strömt aus, bis der Kolben aufgrund der Schwerkraft seine unterste Position erreicht, in welcher er die Ausflussöffnungen verschliesst.

Die DE 32 21 438 zeigt eine Vorrichtung zum Entnehmen einer bestimmten Flüssigkeitsmenge aus einem Behälter. Sie weist einen in einem Zylinder gleitbar angeordneten Kolben auf, wobei der Zylinder an einem Ende mit einem auf der Behälteröffnung befestigten Ventilblock verbunden ist. Der Ventilblock weist einen Ansaugkanal mit Ansaugventil auf, sowie einen Auslasskanal mit Auslassventil. Der Kolbenhub ist axial begrenzt, wobei der eine Anschlag beweglich ist und stufenförmig ausgeführt ist und längs einer zum Zylinder koaxialen Schraubenlinie verläuft. Einer der Anschläge ist in Umfangsrichtung des Zylinders verstellbar. Je nach gegenseitiger Winkellage der Anschläge kann der Kolben mehr oder weniger Weg überstreichen und entsprechend mehr oder weniger Flüssigkeit ansaugen und hernach abgeben. Das Dosiersystem besteht für den Einlass und Auslass aus Kugelventilen und ist ausserdem aus einer Vielzahl von Einzelteilen zusammengesetzt, namentlich auch aus mehreren Kleinteilen. Das erfordert eine sehr aufwändige Montage und insgesamt ist diese Verschlusslösung für zum Beispiel ein auszugiessendes flüssiges Waschmittel gänzlich ungeeignet. Aus FR 2 974 351 ist ein weiterer Dosierverschluss für die Ausgabe einer definierten Dosis von Flüssigkeit bekannt. Dieser funktioniert mit einem Zylinder, der endseitig, das heisst bei gestürztem Verschluss und Behälter unten eine zentrale Ausgussöffnung bildet. Dieser Zylinder ist in dieser Lage weiter oben mit mehreren Fenstern auf gleicher Höhe ausgestattet, durch die Flüssigkeit aus dem ausgerüsteten Behälter ins Innere des Zylinders strömen kann, und am anderen, dann oberen Ende ist der Zylinder offen. Der Zylinder passt mit seinem offenen Ende voran in das Innere eines Ausguss-Stutzens, indem er an seinem unteren Ende über eine nach aussen führende radiale Brücke mit einer Muffe verbunden ist, die aussen über den Ausguss-Stutzen aufschraubbar oder aufklickbar ist. Im Innern des Zylinders ist ein Dosierelement angeordnet, in Form einer Kappe, die im Innern des Zylinders in axialer Richtung geführt ist. Die Kappe ist mit ihrer offenen Seite voran, das heisst mit ihrem Deckel in Richtung gegen das äussere Ende des Zylinders hin gerichtet in diesen eingeführt. Anschliessend an die Aussenseite des Kappendeckels gegen das äussere Ende des Zylinders hin erstrecken sich Federelemente zu einem endseitigen Teller oder Ring, der auf der Innenseite des unten bis auf eine zentrale Ausgussöffnung verschlossenen Zylinders abgestützt ist. In gestürzter Lage des Behälters befinden sich die Fenster im Zylinder unterhalb der Kappe. Flüssigkeit kann in dieser Lage von aussen durch die Fenster in den Bereich unterhalb der Kappe in das Innere des Zylinders strömen, wo sich die Federelemente befinden. Wird der Behälter jetzt zusammengequetscht, so wird die Kappe im Zylinder gegen die Kraft der Federelemente nach unten geschoben, bis die Seitenwände der Kappe schliesslich in der untersten Stellung die Fenster im Zylinder verschliessen. Die Flüssigkeit unterhalb der Kappe, ein definiertes Volumen, wurde dabei durch die zentrale Öffnung unten am Zylinder ausgestossen. Nach dem Loslassen des Behälters kehrt dieser elastisch in seine Ausgangslage zurück. Die Federelemente entspannen sich dabei wieder und schieben die Kappe zurück in ihre Ausgangsstellung. Sobald die Fenster von der Kappe freigegeben sind, strömt erneut Flüssigkeit in den Dosierraum unterhalb der Kappe, wo sich die Federelemente im Zylinder befinden. Ein neuer Dosierzyklus kann beginnen. Dieser Dosierverschluss funktioniert aber erstens nur dann, wenn der damit ausgerüstete Behälter elastisch zusammenquetschbar und von selbst wieder in seine Ausgangslage zurückkehrt. Zweitens kann bei einer bestimmten Dimensionierung dieses Dosierverschlusses nur eine einzige definierte Dosis ausgegeben werden. Diese Dosis lässt sich nicht verstellen, weder in Stufen noch stufenlos.

Angesichts dieses Standes der Technik ist es die Aufgabe der vorliegenden Erfindung, eine Dosiervorrichtung für eine Flüssigkeitszufuhr aus einem Behälter oder Schlauch mit Stutzen für flüssige Inhalte von dick- bis dünnflüssiger Viskosität zu schaffen, die mit einer Minimalzahl von Teilen auskommt, höchst einfach zu montieren ist, und die in der Anwendung narrensicher ist, nicht verstopft und eine zuverlässige Dosierung durch einfaches Kippen in eine Ausgiesslage oder durch Stürzen und leichtes Quetschen des Behälters oder eines zu einem Schlauch zugehörigen Balges erlaubt, aus dem die Flüssigkeit zugeführt wird. In einer besonderen Ausführung soll die Dosiermenge zwischen einem Minimum und einem Maximum stufenlos regulierbar sein, und in einer weiteren Einstellung ein kontinuierliches Ausgiessen erlauben.

Diese Aufgabe wird gelöst von zwei Dosiervorrichtungen, je ausgeführt zur Ausgabe einer Dosierportion aus einem Behälter oder Schlauch mit Stutzen, welche beiden Ausführungen je eine gemeinsame erfinderische Idee verwirklichen, indem eine Dosier-Steuerkammer während der Ausgabe einer Dosis von leer zu voll befüllt wird. Die erste Ausführung ist gekennzeichnet durch die Merkmale des unabhängigen Patentanspruchs 1, und die zweite Ausführung ist gekennzeichnet durch die Merkmale des unabhängigen Patentanspruchs 2.

Verschiedene Ausführungen dieser beiden Dosiervorrichtungen und ihre Teile werden nachfolgend anhand der Zeichnungen beschrieben und die Funktion dieser Teile und die Wirkungsweise dieser Dosiervorrichtungen werden ausführlich erklärt und erläutert.

Es zeigt:
- Figur 1:: Die Dosiervorrichtung nach dem unabhängigen Patentanspruch 2 in gestürzter Ausgiesslage, mit entferntem Schliessmittel;
- Figur 2:: Eine ähnliche Dosiervorrichtung in gestürzter Ausgiesslage, von schräg unten gesehen in Perspektive dargestellt, mit dem um 180° weggeschwenkten Schliessmittel;
- Figur 3:: Diese Dosiervorrichtung in gestürzter Ausgiesslage, von schräg oben gesehen in Perspektive dargestellt;
- Figur 4:: Das erste, stationäre Teil des Dosiermittels, nämlich den Becher mit Fenster;
- Figur 5:: Das zweite, bewegliche Teil des Dosiermittels, nämlich den Dosierkolben mit Fortsatz;
- Figur 6:: Das Dosiermittel in die Vorrichtung eingesetzt, mit dem Dosierkolben in seiner obersten Stellung im Becher;
- Figur 7:: Diese Dosiervorrichtung in einem Axialschnitt dargestellt, mit dem Dosierkolben in seiner obersten Stellung im Becher, bereit zur Ausgabe einer Dosierportion;
- Figur 8:: Diese Dosiervorrichtung in einem Axialschnitt dargestellt, mit dem Dosierkolben auf seinem Weg nach unten, bei der Ausgabe der Dosierportion;
- Figur 9:: Diese Dosiervorrichtung in einem Axialschnitt dargestellt, mit dem Dosierkolben in seiner untersten Position, nach Ausgabe der Dosierportion;
- Figur 10:: Diese Dosiervorrichtung in einem Axialschnitt dargestellt, mit dem Dosierkolben in seiner untersten Position, nach Druckentlastung des Behälters und in der Folge aufgrund des Atmosphärendrucks geschwenktem Dosierkolben im Becher;
- Figur 11:: Diese Dosiervorrichtung in einem Axialschnitt dargestellt, mit dem Dosierkolben in seiner obersten Position, nach Belüftung des Behälters und Reduktion der Schwenkung infolge der geometrischen Auslegung der Teile;
- Figur 12:: Eine alternative Ausführung des ersten, stationären Teils des Dosiermittels, nämlich des Bechers mit Fenster;
- Figur 13:: Eine alternative Ausführung des zweiten, beweglichen Teils des Dosiermittels, nämlich des Dosierkolbens mit ebenem Fortsatz;
- Figur 14:: Diese Dosiervorrichtung in der alternativen Ausführung mit einem Dosierkolben mit ebenem Fortsatz, von schräg unten gesehen dargestellt.
- Figur 15:: Diese Dosiervorrichtung ohne eingesetztes Dosiermittel, in einer Ausführung zum stufenlosen Verstellen der Dosiermenge zwischen einem Minimum und einem Maximum ;
- Figur 16:: Diese Dosiervorrichtung zum stufenlosen Verstellen der Dosiermenge von unten gesehen, mit Einstellung für eine minimale Dosiermenge;
- Figur 17:: Diese Dosiervorrichtung zum stufenlosen Verstellen der Dosiermenge von unten gesehen, mit Einstellung für eine maximale Dosiermenge;
- Figur 18:: Diese Dosiervorrichtung montiert an einem Schlauchende, welches mit einem Rückschlagventil, Balg und Schlauchstutzen ausgerüstet ist;
- Figur 19:: Eine alternative Ausführung einer Dosiervorrichtung mit Ausguss-Aufsatz und Verschlusskörper mit den Merkmalen des Patentanspruch 1;
- Figur 20:: Den Verschlusskörper mit Dosier-Steuerkammer dieser Dosiervorrichtung nach Figur 19 in Ausgiesslage, teilweise aufgeschnitten dargestellt;
- Figur 21:: Den Verschlusskörper nach Figur 20 in einem Schnitt längs der Zylinderachse des Verschlusskörpers;
- Figur 22:: Den Verschlusskörper mit Dosier-Steuerkammer dieser Dosiervorrichtung nach Figur 19 in Ausgiesslage, teilweise aufgeschnitten dargestellt, mit den verschiebbaren Begrenzungswänden auf halbem Verschiebeweg und die ausfliessende Flüssigkeit mit Pfeilen angedeutet;
- Figur 23:: Den Verschlusskörper nach Figur 22 in einem Schnitt längs der Zylinderachse des Verschlusskörpers;
- Figur 24:: Den Verschlusskörper mit Dosier-Steuerkammer dieser Dosiervorrichtung nach Figur 19 in Ausgiesslage, teilweise aufgeschnitten dargestellt, mit den verschiebbaren Begrenzungswänden am Ende ihres Verschiebeweges, womit der Ausfluss gestoppt ist;
- Figur 25:: Den Verschlusskörper nach Figur 24 in einem Schnitt längs der Zylinderachse des Verschlusskörpers;
- Figur 26:: Den Ausguss-Aufsatz gesondert dargestellt, in einem Teilschnitt dargestellt;
- Figur 27:: Den Ausguss-Aufsatz von oben gesehen in perspektivischer Ansicht dargestellt;
- Figur 28:: Den Ausguss-Aufsatz von unten gesehen dargestellt;
- Figur 29:: Den Ausguss-Aufsatz der Seite her gesehen in einem diametralen Schnitt dargestellt;
- Figur 30:: Den Ausguss-Aufsatz von oben gesehen dargestellt;
- Figur 31:: Diese Dosiervorrichtung nach den Figuren 19 bis 30 in einer Ausführung mit verstellbarer Dosiermenge, in einem Teilschnitt dargestellt, für die Ausgabe einer minimalen Dosiermenge, zu Beginn des Dosiervorganges;
- Figur 32:: Diese Dosiervorrichtung nach Figur 31, am Ende des Dosiervorganges;
- Figur 33:: Diese Dosiervorrichtung nach den Figuren 19 bis 30 in einer Ausführung mit verstellbarer Dosiermenge, in einem Teilschnitt dargestellt, für die Ausgabe einer maximalen Dosiermenge, zu Beginn des Dosiervorganges;
- Figur 34:: Diese Dosiervorrichtung nach Figur 33, am Ende des Dosiervorganges;
- Figur 35:: Diese Dosiervorrichtung nach den Figuren 19 bis 30 in einer Ausführung mit verstellbarer Dosiermenge, in einem Teilschnitt dargestellt, für das ungehinderte, kontinuierliche Ausgiessen von Flüssigkeit, zu Beginn des Ausgiessens;
- Figur 36:: Diese Dosiervorrichtung nach Figur 35, in Endlage der verschiebbaren Begrenzungswände der Dosier-Steuerkammer für das ungehinderte, kontinuierliche Ausgiessen.

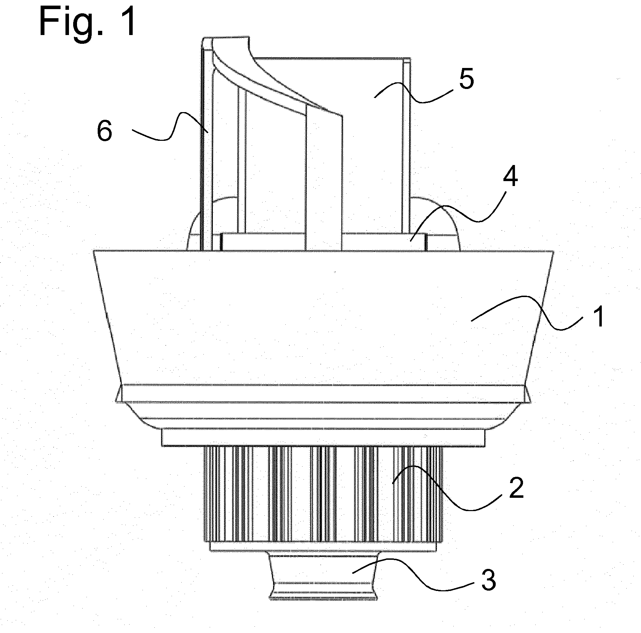

Die Figur 1 zeigt die Dosiervorrichtung mit ihren Merkmalen nach dem unabhängigen Patentanspruch 2, im gezeigten Beispiel als Dosierverschluss ausgeführt, in gestürzter Ausgiesslage, mit entferntem Schliessmittel, welches eine Kappe sein kann, die scharnierend auf den Verschluss-Ausguss 3 aufschwenkbar und darauf einrastbar ist oder darauf aufklickbar oder aufschraubbar ist. Diese Dosiervorrichtung oder hier dieser Dosierverschluss ist mit seinem Verschlusskörper 1 auf den Stutzen eines Behälters oder Schlauches aufschraubbar, aufprellbar oder dichtend auf schieb- oder aufklickbar. Damit der Verschlusskörper 1 dichtend auf einem Stutzen befestigbar ist, kann er zum Beispiel mit einem Innengewinde versehen sein, das auf ein entsprechendes Aussengewinde des Stutzens passt. Umgekehrt kann der Stutzen ein Innengewinde aufweisen, und dann wird der Verschlusskörper mit einem sich in den Stutzen erstreckenden Rohrfortsatz ausgeführt, welcher dann ein entsprechendes Aussengewinde aufweist. Als Alternative kann der Verschlusskörper mittels eines innenliegenden umlaufenden Wulstes über einen Aussenrand an einem sonst glatten Flaschen-, Behälter- oder Schlauchstutzen aufgeprellt sein. Auch ein Aufschieben über eine Gummidichtung oder ein Aufklicken über Einrastelemente ist denkbar. Schliesslich muss der Verschlusskörper 1 einfach dichtend auf einem Stutzen des Behälters oder Schlauches befestigt sein - egal wie. Im Bild unten aus dem Verschlusskörper 1 ragt ein gerändelter Drehkörper 2, welcher innerhalb des Verschlusskörpers 1 um einen gewissen Bereich um die Verschlussachse drehbar eingesetzt ist. Dieses ist jedoch bereits eine Option, wie das später klarwird.

In einer einfachsten Ausführung kommt die Dosiervorrichtung bzw. der Dosierverschluss ohne einen solchen Drehkörper aus, der dann einfach fest im Verschlusskörper sitzen kann oder mit ihm ein einstückiges Teil bilden kann, also kein Drehkörper mehr ist. Ganz unten erkennt man den Ausguss 3 des Dosierverschlusses, aus dessen zentrischem Loch die dosierte Flüssigkeit austritt. Oberhalb des Verschlusskörpers 1 sind die beiden Bauteile des Dosiermittels erkennbar, nämlich das obere Ende eines stationären Bechers 4 mit dem hier nicht sichtbaren Fenster, sowie der Fortsatz 5, welcher zu einem beweglichen Dosierkolben gehört. Dieser Fortsatz 5 bildet eine Verlängerung der zylindrischen Wand über ein Winkelsegment von 90° bis 200°. Schliesslich ist in dieser Ansicht ein oben schraubenlinienförmiger Begrenzer 6 zu sehen, dessen Bedeutung und Funktion im weiteren Verlauf der Beschreibung klarwird.

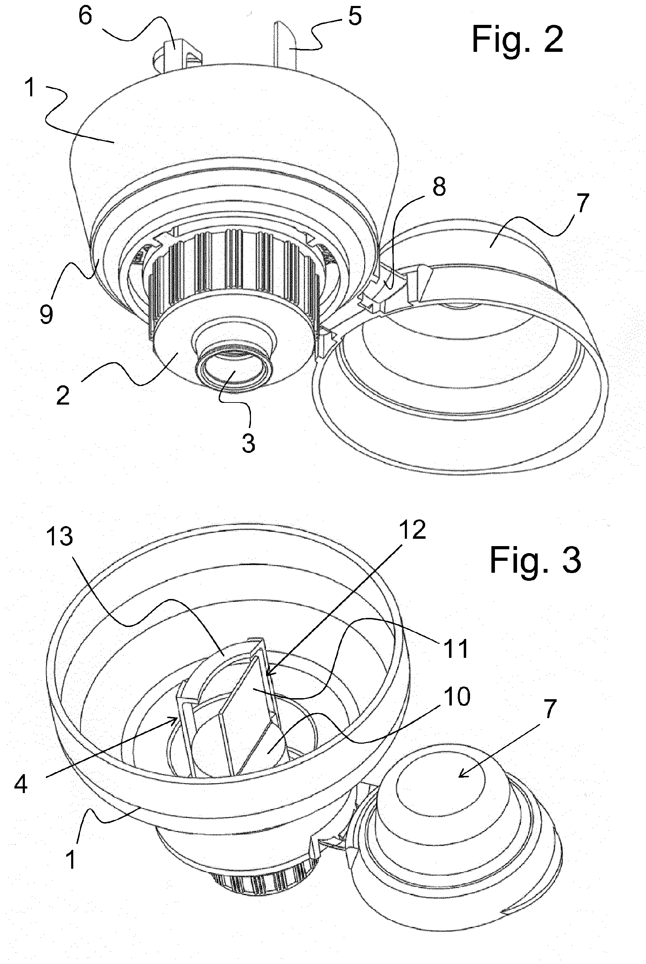

Die Figur 2 zeigt diesen Dosierverschluss in gestürzter Ausgiesslage, von schräg unten in Perspektive dargestellt. Das Schliessmittel ist hier eine Kappe 7, die über ein Filmscharnier 8 auf den Verschlusskörper 1, den Drehkörper 2 und Ausguss 3 aufschwenkbar ist, und die den Ausguss 3 unter Einklicken auf dem Rand 9 des Verschlusskörpers 1 verschliesst. Oben erkennt man den Begrenzer 6 und den Fortsatz 5 am Dosierkolben, die zur Beschreibung von Figur 1 erwähnt wurden.

Die Figur 3 zeigt diesen Dosierverschluss in gestürzter Ausgiesslage, von schräg oben in Perspektive dargestellt. In dieser Ansicht erkennt man die beiden Bauteile des Dosiermittels, nämlich im gezeigten Beispiel den beweglichen Dosierkolben 10 mit seinem hier ebenen, sich nach oben erstreckenden Fortsatz 11, sowie den oberen Teil eines hohlzylindrischen Bechers 4 mit einem Fenster 12, das sich hier über eine ganze seitliche Hälfte des Bechers 4 erstreckt. Diese Teile werden anhand der weiteren Figuren im Folgenden ausführlich beschrieben und ihre Funktion wird erläutert.

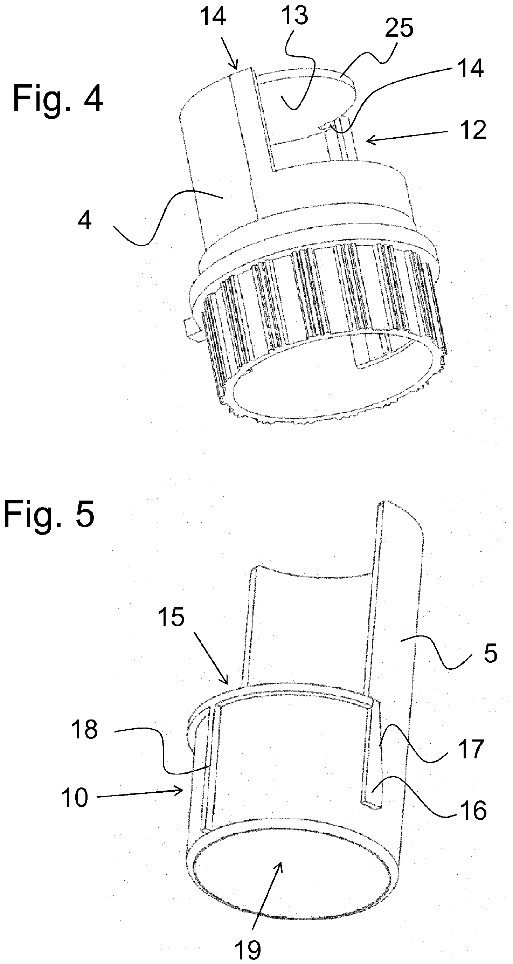

Die Figur 4 zeigt das erste, stationäre Bauteil des Dosiermittels, nämlich den hohlzylindrischen Becher 4 mit seitlichem Fenster 12. Im Wesentlichen handelt es sich bloss um einen Hohlzylinder, der also oben mit einem Deckel 13 geschlossen ist, wobei dieser Deckel 13 im gezeigten Beispiel eben ist, jedoch auch eine von der Ebene abweichende Form aufweisen kann. Sein Fenster 12 ist am oberen Ende in der Umfangswand ausgenommen und erstreckt sich hier um die Hälfte des Umfanges. Der Deckel 13 ist an seinem Rand im äusseren Randbereich, welcher sich längs des oberen Fensterrandes erstreckt, um die Wandstärke der Umfangswand im Radius verkürzt. Sein äusserer, ein wenig nach innen versetzter Rand 25 erstreckt sind dann beidseits etwas weiter als um den halben Umfang, sodass auf beiden Seiten des Fensters 12 Einschnitte 14 im Deckel 13 gebildet sind. An seiner Innenseite sind im Hohlzylinder des Bechers 4 Führungsrippen ausgeformt, die sich in axialer Richtung erstrecken.

In den hohlzylindrischen Becher von Figur 4 ist das zweite, bewegliche Bauteil des Dosiermittels einsteckbar, nämlich ein Dosierkolben 10 mit Fortsatz 5 wie in Figur 5 dargestellt. Dieser Dosierkolben 10 formt gewissermassen einen Stuhl, der mit einer Husse überzogen ist. Im unteren Bereich bildet er einen unten offenen Hohlzylinder 19, und seine Aussenwand erstreckt sich über die obere Abschlussfläche 15 des Hohlzylinders 19 hinaus nach oben und bildet einen Fortsatz 5 in Form eines frei stehenden Segmentes einer Umfangswand. Dieser Fortsatz 5 erstreckt sich hier um den halben Umfang des Hohlzylinders 19 oder Dosierkolbens 10. Er kann sich auch über ein Winkelsegment von 90° bis 200° in axialer Richtung zum Dosierkolben 10 erstrecken. Um beim bildhaften Vergleich mit einem Stuhl zu bleiben, so bildet dieser Fortsatz 5 gewissermassen die Stuhllehne. Aussen am Dosierkolben 10 findet sich auf beiden Seiten eine keilförmige Rippe 16 mit einer Schrägfläche 17, die also leicht schiefwinklig zur Achsenrichtung des Hohlzylinders bzw. Dosierkolbens 10 verläuft. Im gezeigten Beispiel findet sich ausserdem eine axiale Rippe 18 vorne am Becher, bzw. vorne am von ihm gebildeten "Stuhl".

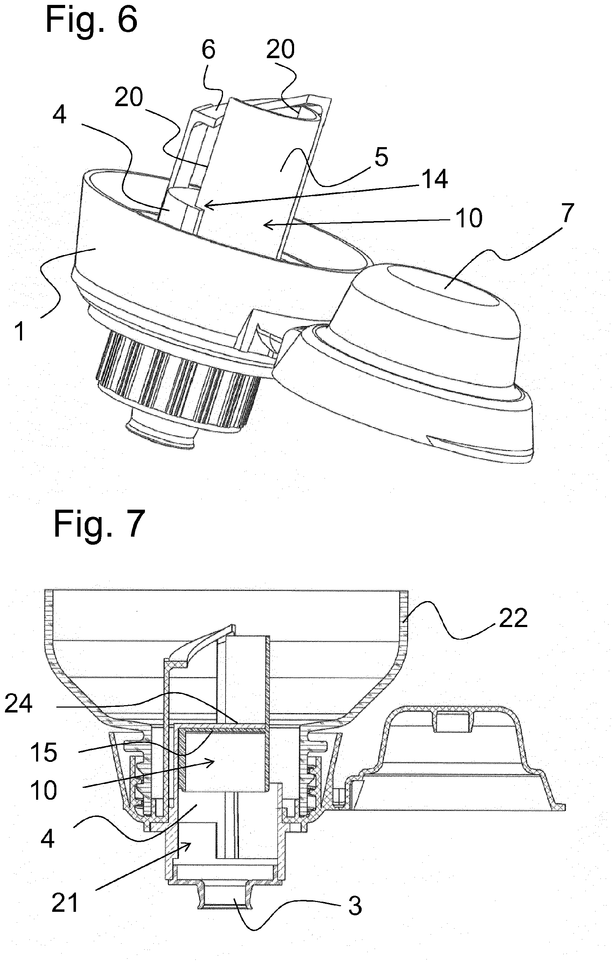

Die Figur 6 zeigt das Dosiermittel in die Dosiervorrichtung oder hier in den Dosierverschluss eingesetzt, mit dem Dosierkolben 10 mit seinem Fortsatz 5 in seiner obersten Stellung innerhalb des Bechers 4. Wie man erkennt, passt der Fortsatz 5 mit seinen seitlichen Rändern 20 in die Einschnitte 14 am Deckel 13 des Bechers 4 hinein. Somit kann der Dosierkolben 10 im Innern des Bechers 4 sich in axialer Richtung verschieben, und weil die Dimensionierung der Teile so gestaltet ist, dass dabei bewusst ein Spiel offengelassen ist, vermag sich der Dosierkolben 10 auch wenig gegenüber der Achse des Bechers 4 seitlich innerhalb des Bechers zu neigen, sodass also die Rotationsachse des Dosierkolbens 10 nicht mehr genau parallel zu jener des hohlzylindrischen Bechers 4 verläuft. Diese Geometrie erweist sich als entscheidend für die Funktion der Dosierung, wie das noch im Einzelnen erklärt wird. Schliesslich erkennt man in Figur 6 noch den schraubenlinienförmigen Begrenzer 6, der allerdings für die Grundfunktion der Dosierung ohne Belang ist, sondern eine Option bietet, wenn die Dosiermenge in einem gewissen Rahmen regulierbar sein soll, was auch noch genauer erläutert wird, wenn im Folgenden die Funktionsweise der Dosierung Schritt für Schritt beschrieben und erklärt wird.

Die Figur 7 zeigt die Dosiervorrichtung bzw. den Dosierverschluss in einem Axialschnitt, mit dem Dosierkolben 10 in seiner obersten Stellung innerhalb des Bechers 4, bereit zur Ausgabe einer Dosierportion. In dieser Position hat sich der Raum 21 unterhalb des Dosierkolbens 10 mit Flüssigkeit aus dem Behälter 22 gefüllt, mit dem der Dosierverschluss ausgerüstet ist. Sie kann allerdings nicht ausströmen, weil keine Luft durch den Ausguss 3 von unten einzuströmen vermag. Dies deshalb, weil die Dosierkammer oben annähernd dicht verschlossen ist, das heisst der Dosierkolben 10 ist in dieser obersten Position gegenüber dem Becher 4 weitgehend abgedichtet, indem sich sein Fortsatz 5 vor das Fenster 12 im Becher 4 schiebt. Diese Geometrie und auch die Viskosität verhindern ein Eindringen von Luft und somit auch ein Ausströmen von Flüssigkeit durch den Ausguss 3. Der Beginn des Dosierungszyklus wird ab diesem Punkt beschrieben, mit der Lage des Dosierkolbens 10 wie gezeigt. Nun gilt es, diese Dosierportion innerhalb des Dosierkolbens 10 und unterhalb desselben nach aussen auszugiessen. Dazu muss im Innern des Behälters 22 oder im Falle eines Schlauches im Innern des Schlauches ein höherer Druck erzeugt werden als jener, der ausserhalb des Behälters, Schlauches und Verschlusses herrscht, also ein höherer Druck als Atmosphärendruck. Das geschieht, indem der Behälter 22 mit einer Hand oder beiden Händen zusammengedrückt und somit leicht gequetscht wird. Im Falle eines Schlauches für die Flüssigkeitszuführung kann das bewerkstelligt werden, indem in den Schlauch in seinem Endbereich vor dem Dosierverschluss ein Schlauchventil eingebaut wird, und dieses in einen elastischen komprimierbaren Balg mündet, welcher dann in einen Stutzen mündet und welcher Stutzen schliesslich mit der Dosiervorrichtung ausgerüstet ist. Je stärker der Behälter oder der Balg bei geschlossenem Schlauchventil gequetscht wird, umso rascher erfolgt dann das Ausgeben der Dosiermenge, die in einer typischen Dimensionierung der Dosiervorrichtung ein Volumen von 80 ml bis 90 ml aufweist. Selbstverständlich lässt sich durch eine andere Bemessung, also gewissermassen durch eine massstäbliche Vergrösserung oder Verkleinerung der Dosiervorrichtung die Dosiermenge grösser oder kleiner gestalten. Die Dosierkammer - nicht zu verwechseln mit der Dosier-Steuerkammer - ist dabei stets der Raum 21 unterhalb des Dosierkolbens 10.

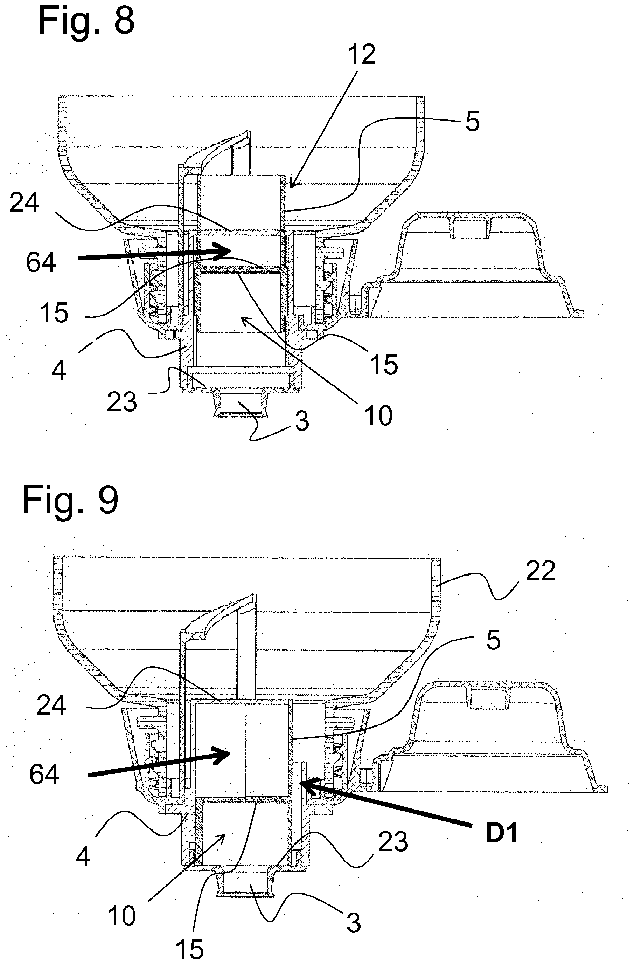

Der flüssige Inhalt des Behälters 22 drückt beim Quetschen des Behälters oder Balges von oben auf den Deckel 15, also sinngemäss auf die Stuhl-Sitzfläche des sinngemässen Stuhls, den der Dosierkolben 10 bildet. Unterhalb des Deckels 15 herrscht bloss Atmosphärendruck, also ein tieferer Druck. Somit verschiebt sich der Dosierkolben 10 im Innern des Bechers 4 wie in Figur 8 gezeigt nach unten und drückt die unten eingeschlossene Dosierportion der Flüssigkeit durch den Ausguss 3 nach aussen. Der Raum oberhalb des Deckels 15 bildet eine Dosier-Steuerkammer 64, die im Zustand wie in Figur 7 gezeigt zunächst kein Volumen einschliesst, wobei aber das Volumen durch das nach unten Bewegen des Dosierkolbens 10 laufend wächst und in der untersten Position des Dosierkolbens 10 schliesslich ein Maximum erreicht. Der Raum der Dosier-Steuerkammer 64 wird durch insgesamt vier Wände begrenzt, nämlich von zwei stationären und zwei verschiebbaren Wänden. Es sind nämlich zwei zueinander parallel verlaufende, in Axialrichtung zum Stutzen verlaufende Seitenwände vorhanden, von denen die eine gegenüber der anderen verschiebbar ist. Die eine Wand ist stationär, nämlich die Umfangswand des Bechers 4, während die verschiebbare Seitenwand vom Fortsatz 5 gebildet wird. Dazu kommen zwei weitere Begrenzungswände, nämlich der Boden 24 des Bechers als stationäre Begrenzungswand und der Deckel 15 des Dosierkolbens bzw. die Sitzfläche des sinngemässen Stuhls als verschiebbare Begrenzungswand. Der Boden 24 bzw. die Bodenwand steht in einem Winkel von der Wand des Bechers 4 ab, und der Deckel 15 steht hier in einem rechten Winkel vom Fortsatz 5 ab. Das von allen vier Wänden 15, 5, 4, 24 umschlossene variable Volumen bildet die Dosier-Steuerkammer 64. Beim Quetschen des Behälters wird der Dosierkolben nach unten geschoben und das Volumen der Dosier-Steuerkammer vergrössert sich und wird gleichzeitig von oben gefüllt. Die Dosiervorrichtung ist in Figur 8 wiederum in einem Axialschnitt dargestellt, mit dem Dosierkolben 10 auf seinem Weg im Innern des Bechers 4 nach unten, bei der Ausgabe der Dosierportion. In der dargestellten Position hat der Dosierkolben 8 etwa ein Fünftel seines Weges nach unten zurückgelegt. Der halbkreisförmige Fortsatz 5 am Dosierkolben 10 schmiegt sich innerhalb des Fensters 12 an die Innenwand des Bechers 4 an und verschliesst den Zwischenraum annähernd flüssigkeitsdicht. Dieses Niederdrücken des Dosierkolbens 10 aufgrund des oben höheren Druckes als auf seiner Unterseite setzt sich fort, bis der Dosierkolben 10 unten am Innenrand 23 des Ausgusses 3 einen Anschlag findet.

Die unterste Endposition des Dosierkolbens 10 ist in Figur 9 dargestellt. Sie zeigt die Dosiervorrichtung bzw. den Dosierverschluss in einem Axialschnitt, mit dem Dosierkolben 10 in seiner untersten Position, nach Ausgabe der Dosierportion. Bis kurz vor Erreichen dieser Position floss auch Flüssigkeit aus dem Behälter hinter dem Fortsatz 5, also sinngemäss hinter der Stuhllehne, vom Behälter durch den Raum dahinter nach unten. Die hierzu wichtige Distanz zwischen der Rückseite des Fortsatzes 5 bzw. der sinngemässen Stuhllehne zur Innenwand des hohlzylindrischen Bechers 4 ist hier mit D1 eingezeichnet. In der gezeigten Position ist der Verschluss dichtend verschlossen, indem der untere Rand des Dosierkolbens 10 dichtend auf dem Rand 23 im Innern des Ausgusses 3 aufliegt und ihn verschliesst. Die Dosierung wird letztlich durch das Befüllen der Dosier-Steuerkammer 64 erreicht. Damit das Ausgiessen einer Dosis Flüssigkeit erfolgt, die zunächst in der gefüllten Dosierkammer 21 gefangen bzw. zurückgehalten wird, muss die durch die Abwärtsbewegung des Dosierkolbens 10 im Volumen wachsende Dosier-Steuerkammer 64 von leer auf voll gefüllt werden. Im Gleichschritt dazu wird die Dosis durch den Ausguss 3 ausgegeben.

Jetzt gilt es, eine neue Portion der Flüssigkeit zum dosierten Ausgeben vorzubereiten bzw. in die Dosierkammer des Dosierkolbens 10 aus der Flüssigkeitszuführung zu laden. Zum Ausgeben der Dosis wurde ja der Behälter zusammengedrückt, oder im Falle eines Zufuhrschlauches dessen eingebauter Balg zusammengedrückt, bis der Dosierkolben 10 nach ganz nach unten gedrückt wurde und nach der Ausgabe der Dosierportion den Behälter dichtend verschloss. Wenn man nun den Behälter 22 oder Balg wieder loslässt, so formt er sich elastisch zurück und erzeugt damit einen Unterdruck gegenüber dem aussen herrschenden Atmosphärendruck. In der Folge gibt es einen Drucküberschuss, welcher auf die Unterseite des Deckels 15 bzw. auf die sinngemässe Unterseite der Sitzfläche des Stuhls wirkt, welcher vom Dosierkolben 10 geformt wird. Weil nun aber der Dosierkolben 10 im Innern des Bechers 4 mit Absicht mit ein wenig Spiel sitzt, gibt er sofort in jener Richtung nach, wo kein Widerstand vorhanden ist, und das ist in Schwenkrichtung der sinngemässen Stuhllehne nach hinten.

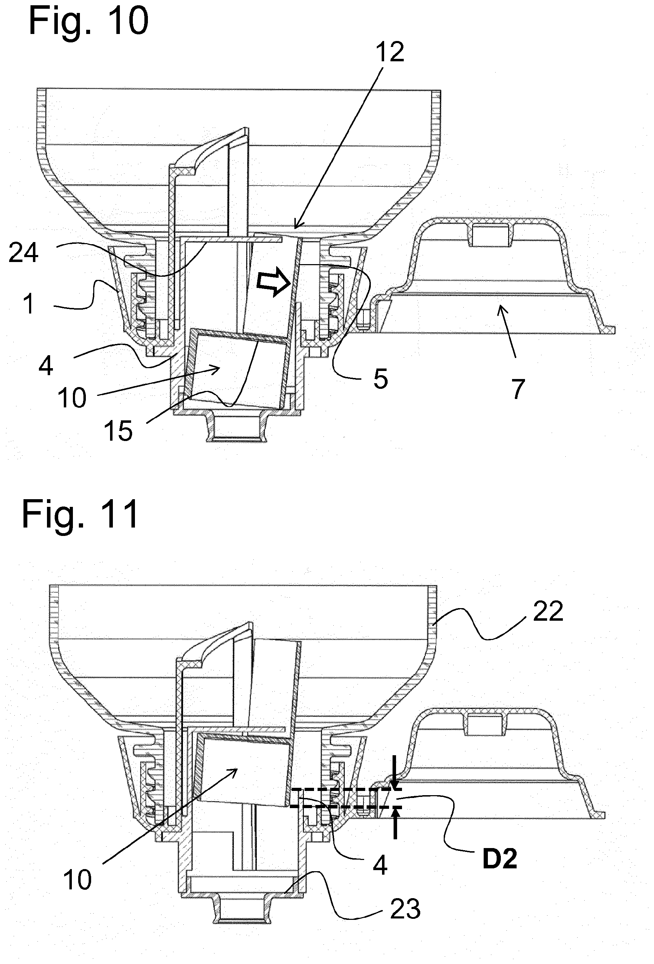

Also neigt sich der Fortsatz 5 wie mit dem Pfeil in Figur 10 eingezeichnet leicht nach aussen. Diese Bewegung bzw. seitliche Neigung des Dosierkolbens 10 bewirkt, dass er zusammen mit dem Becher 4 als Ventil wirkt. Er nimmt also nicht nur eine reine Funktion als Kolben und Variierer des Dosier-Steuerkammer-Volumens wahr, sondern auch eine Ventilfunktion. Durch die entstehenden Spalten infolge des bewusst gewählten Spiels und durch deren Verbreiterung infolge der Neigung des Dosierkolbens 10 im hohlzylindrischen Becher 4 kann Luft von unten durch diese Spalten nach oben in das Innere des Behälters 22 oder Balges strömen und ihn belüften. Im gleichen Volumen fliesst Flüssigkeit aus dem Behälter 22 oder im Falle eines Schlauches aus seinem elastischen Balg durch die Spalten zwischen Becher 4 und Dosierkolben 10 nach unten in die Dosierkammer. Diese Anfangsposition für das Füllen der Dosierkammer ist in Figur 10 gezeigt. Sie zeigt den Dosierverschluss in einem Axialschnitt, mit dem Dosierkolben 10 in seiner untersten Position, nach Druckentlastung des Behälters 22 und in der Folge mit dem aufgrund des Atmosphärendrucks geschwenkten Dosierkolben 10 im Innern des Bechers 4. Bei anhaltender und herrschender Druckdifferenz bewegt sich nun aber der Dosierkolben 10 im hohlzylindrischen Becher 4 aus dieser Position nach oben, weil ja der herrschende Atmosphärendruck unterhalb seines Deckels 15 grösser ist als der aufgrund der elastischen Rückbildung des Behälters 22 bzw. Balges in dessen Innerem und somit oberhalb des Deckels 15 herrschende Druck. Die Aufwärtsbewegung des Dosierkolbens 10 setzt sich fort, bis er mit seiner Deckelfläche 15 innen am Boden 24 des hohlzylindrischen Bechers 4 anschlägt. Sein Fortsatz 5 hat sich dabei über und durch das Fenster 12 am Becher 4 nach oben verschoben und überragt nun den Becher 4 in das Behälterinnere, oder im Falle eines Schlauches ragt er in den Schlauchstutzen hinein.

Die schliesslich eingenommene Endposition ist in Figur 11 gezeigt. Sie zeigt die Dosiervorrichtung oder den Dosierverschluss in einem Axialschnitt, mit dem Dosierkolben 10 in seiner obersten Position, nach Belüftung des Behälters 22 oder Schlauchbalges. Im Verlauf der Aufwärtsbewegung des Dosierkolbens 10 wurde dessen Neigung gegenüber der Behälterachse kontinuierlich reduziert. Die Neigung des Dosierkolbens 10 ist also in dieser Endposition gegenüber der anfänglichen Neigung kleiner. In der hier gezeigten Endposition gibt es eine Überlappung der Höhe des unteren Randes des Dosierkolbens 10 auf der Seite seines Fortsatzes 5 mit dem oberen Rand des hohlzylindrischen Bechers 3 um eine gewisse Distanz, welche hier in Figur 11 mit D2 eingezeichnet. Damit die Neigung des Dosierkolbens 10 im oberen Bereich seines Weges reduziert wird und schliesslich in der Endposition eingeschränkt ist, sodass sich die gezeigte Endposition einstellt, sind Rippen 18, 17 auf der Aussenseite des Dosierkolbens 10 angebracht, die in Figur 5 sichtbar sind, und welche als Führungen wirken. Während der gesamten Aufwärtsbewegung des Dosierkolbens 10 konnte im Gegenzug zur Belüftung des Behälterinhaltes Flüssigkeit aus demselben durch die Spalten rund um den Dosierkolben 10 in den Bereich unterhalb desselben rinnen und diesen Raum füllen. Sobald nun erneut auf die Aussenwände des Behälters 22 oder des Balges gedrückt wird, erhöht sich dessen Innendruck wiederum über den Atmosphärendruck hinaus. Erneut wirkt jetzt der Dosierkolben 10 als Ventil und verschliesst die Spalten, durch welche zuvor die Flüssigkeit aus dem Behälter 22 oder Balg in den Dosierraum rinnen konnte.

Zusammengefasst wird also, ausgehend aus der untersten Position des Dosierkolbens 10 und bei zusammengequetschtem Behälter 22 oder Balg wie in Figur 9 gezeigt der Dosierkolben 10 zuerst durch Entlasten von Behälter oder Balg und damit Erzeugen eines Unterdruckes gegenüber der Atmosphäre zum Wegschwenken in die Position nach Figur 10 gezwungen und danach zum Aufsteigen, weil unterhalb desselben ein höherer Druck wirkt als oberhalb. Während dieser Bewegung rinnt Flüssigkeiten durch die entstandenen Spalten in die Dosierkammer, wird aber in derselben aufgrund der Druckverhältnisse gehalten. Sobald der Dosierkolben 10 mit seinem Deckel 15 oben am Becher anschlägt, wie in Figur 11 dargestellt, ist die Dosierkammer maximal gefüllt. Jetzt kann wieder Druck im Behälter 22 oder Balg aufgebaut werden, durch Zusammenquetschen. Das führt zum Ausrichten des Dosierkolbens 10 auf die Achse des Bechers 4 und hernach zum Niederfahren des Dosierkolbens 10 und zur Ausgabe der zuvor unterhalb seines Deckels 15 gefangenen Flüssigkeitsportion.

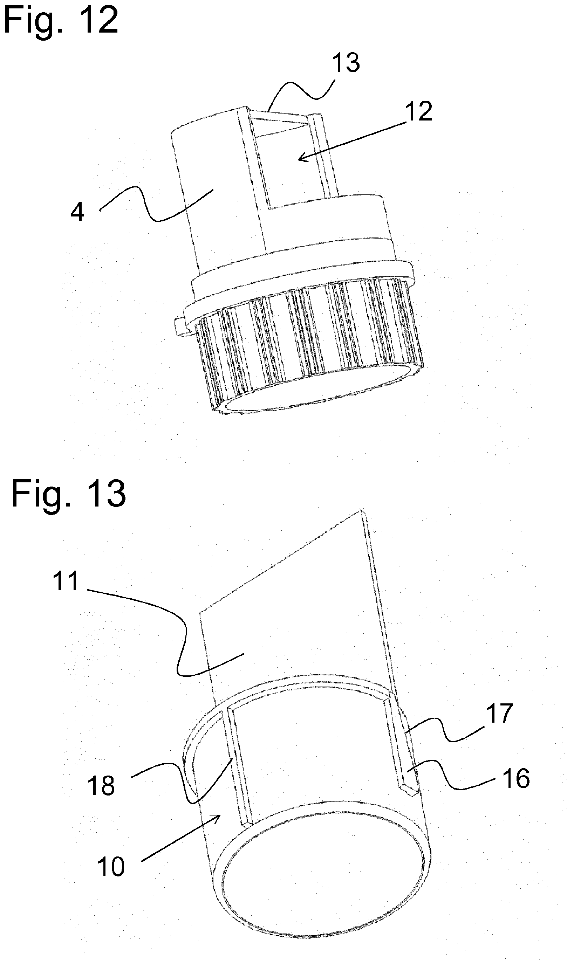

Die bisher vorgestellten Bauteile können indessen auch anders geformt und dimensioniert sein, und jedes Bauteil kann bedarfsweise auch aus mehreren Teilen zusammengesetzt sein, wenngleich gerade ein Vorteil dieser Dosiervorrichtung, auch in ihrer Ausführung als Dosierverschluss, die Tatsache ist, dass sie sich aus bloss diesen beiden Bauteilen, nämlich aus Becher 4 und Dosierkolben 10 herstellen lässt. Die Figur 12 zeigt eine alternative Ausführung des ersten, stationären Teils des Dosiermittels, nämlich des Bechers 4 mit Fenster 12. Das Fenster 12 wird hier durch einen Wegschnitt von fast der ganzen seitlichen Hälfte des Bechers 4 erzeugt. Als Deckel 13 bleibt bloss noch ein etwas mehr als halbkreisförmiger Deckel 13 übrig. Der zugehörige Dosierkolben ist in Figur 13 dargestellt. Dieser weist als Besonderheit einen ebenen Fortsatz 11 auf, der sich also etwa diametral über den sonst zylinderförmigen Dosierkolben 10 erstreckt. Dieser Fortsatz 11 verläuft also als Sekante über den Deckel 15 des zylindrischen Dosierkolbens 10. An dieser Stelle sei erwähnt, dass das Fenster auch anders gestaltet sein kann, ebenso wie auch der Fortsatz. Hauptsache ist, dass sich der Fortsatz bei nach oben geschobenem Dosierkolben über das Fenster schiebt und schliesslich über ihm zu liegen kommt. Die restlichen Elemente am Dosierkolben 10 wie etwa die Rippen 16,17,18 bleiben unverändert. Wird dieser Dosierkolben 10 von unten in den Becher 4 eingesetzt, so überdeckt sein ebener Fortsatz 11 schliesslich das Fenster 12 im Becher 4 annähernd, aber nicht ganz dichtend. Aus dieser obersten Endposition heraus kann der Dosierkolben 10 jedoch leicht um seine Quersachse geneigt werden, sodass der Fortsatz 11 vom Fenster 12 aus wie ein Schrägstell-Fenster leicht nach aussen geneigt werden kann. Weil der Dosierkolben 10 also zwischen einer anfänglichen fast dichtenden Endposition zu einer Schrägstellung wechseln kann, bei welcher die Spalten zwischen dem Rahmen des Fensters 12 und den Rändern des ebenen Fortsatz 11 geöffnet sind, weist dieser eine eigentliche Ventilfunktion auf, was wichtig für die optimale Funktion dieser Dosiervorrichtung bzw. dieses Dosierverschlusses ist.

Die beiden entscheidenden Teile der Dosiervorrichtung bzw. des Dosierverschlusses, nämlich der Becher 4 und der Dosierkolben 10, müssen indessen nicht notwendigerweise zylinderförmig gestaltet sein. Sie können ebenso gut funktionieren, wenn sie andere Querschnittsflächen als einen Kreis formen, etwa ein Oval oder ein Dreieck, Rechteck oder Quadrat mit abgerundeten Ecken oder noch weitere beliebige Formen, zum Beispiel mit einem fünfeckigen oder mehreckigen Querschnitt. Wichtig ist bloss, dass bei unterster Position des Dosierkolbens 10 innerhalb des Bechers 4 die beiden Bauteile ein geschlossenes Ventil bilden, und während des Aufwärtsbewegens des Dosierkolbens 10 innerhalb des Bechers 4 ein offenes Ventil bilden, dessen freier Durchflussquerschnitt sich bis zum Erreichen der obersten Position des Dosierkolbens 10 stetig etwas verkleinert, und wobei sich das Ventil dann schliesst, wenn der Dosierkolben 10 von oben unter Druck gesetzt wird, bzw. ein höherer Druck auf die Oberseite des Deckels 15 wirkt als der dann von unten wirkende Atmosphärendruck. Insgesamt wird dabei eine Dosier-Steuerkammer 64 während der Ausgabe der Dosierportion befüllt und wenn sie voll ist, wird der Ausfluss gestoppt.

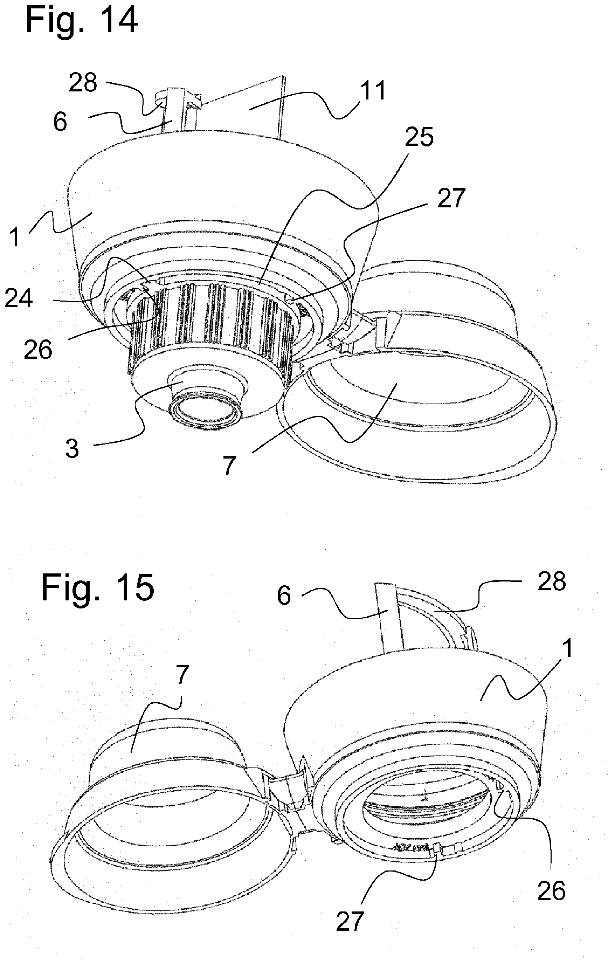

Die Figur 14 zeigt eine Dosiervorrichtung mit einer Ausführung des Dosierkolbens mit einem wie eben in Figuren 12 und 13 vorgestellten ebenen Fortsatz 11. Die Dosiervorrichtung ist hier in einer Ansicht von schräg unten dargestellt. Oben aus dem Verschlusskörper 1 ragt ein schraubenlinienförmiger Begrenzer 6, der einen sich abwärts bzw. in Gegenrichtung sich aufwärts windenden Steg 28 formt, an dessen Unterseite der ebene Fortsatz 11 mit seinem oberen Rand anschlägt. Dieser Steg 28 ist im gezeigten Beispiel schraubenlinienförmig abfallend bzw. ansteigend und ist als Begrenzer 6 mit dem Drehkörper 2 verbunden, der hier unten aus dem Verschlusskörper 1 herausragt. Der Steg 28 kann indessen auch eine von einer Schraubenlinie abweichende Form aufweisen und zum Beispiel stetig oder unstetig ansteigend bzw. abfallend gestaltet sein. Der Drehkörper 2 lässt sich um die zentrale Achse verdrehen, wobei der Verdrehbereich sich um etwa 90° erstreckt und durch einen radial abstehenden mitdrehenden Nocken 24 begrenzt wird, indem dieser zwischen zwei Anschlagnocken 26, 27 am Vorrichtungskörper 1 hin und her verdrehbar ist, aber nicht weiter. Mit dem Verdrehen verändert sich die Lage des schraubenlinienförmigen Steges 28 relativ zum Fortsatz 11, sodass dieser je nach Drehlage des Begrenzers 6 früher oder später mit seinem oberen Rand an der Unterseite des schraubenlinienförmigen Steges 28 einen Anschlag findet. Somit ist der Verschiebeweg des Dosierkolbens 10 im Innern des Bechers verstellbar und somit ist auch die Dosiermenge verstellbar.

Der Begrenzer 6 mit seinem schraubenlinienförmigen Steg 28 ist in Figur 15 deutlich zu erkennen. In dieser Abbildung ist der sonst einstückig mit dem Begrenzer 6 verbundene Drehkörper 2 weggelassen. Dafür sieht man in dieser Abbildung die beiden Anschlagnocken 26, 27 zur Begrenzung des Drehbereichs des Drehkörpers 2. Wenn der Begrenzer 6 mit dem Drehkörper 2 gegenüber dem Vorrichtungskörper 1 verdreht wird, so bewirkt das ein stufenloses Verstellen der Dosiermenge zwischen einem Minimum und einem Maximum.

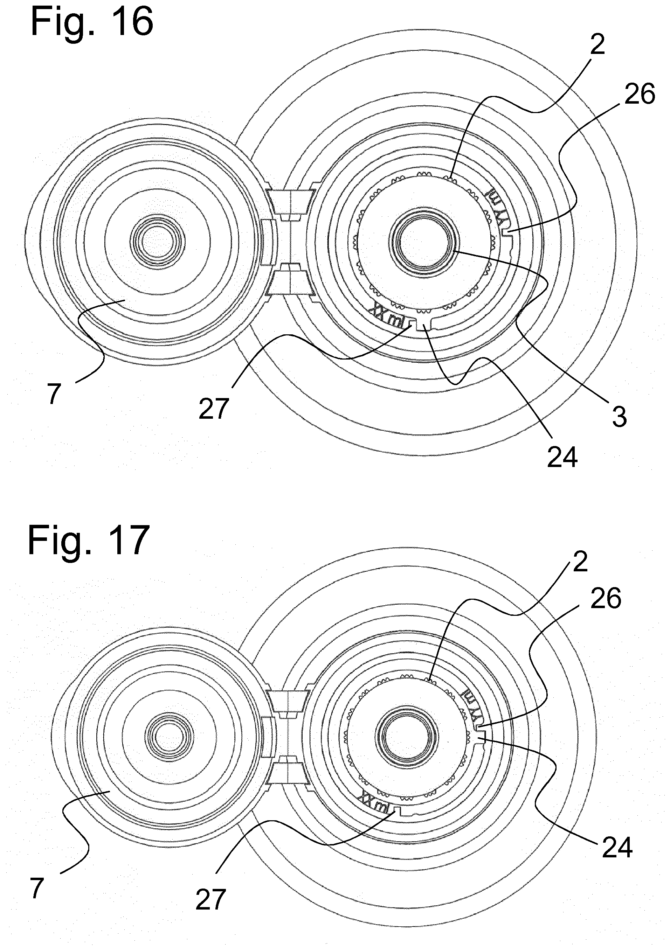

Die Figur 16 zeigt die Dosiervorrichtung zu diesem stufenlosen Verstellen der Dosiermenge von unten gesehen, mit Einstellung für eine minimale Dosiermenge. Der Drehkörper 2 ist hier im Uhrzeigersinn gedreht worden, bis der Nocken 24 am Anschlagnocken 27 anschlug. Der Begrenzer 6 steht dann so, dass der Fortsatz 11 am Dosierkolben 10 nur noch einen minimalen Weg nach oben zurücklegen kann.

Umgekehrt zeigt die Figur 17 die Dosiervorrichtung zum stufenlosen Verstellen der Dosiermenge von unten gesehen, mit der Einstellung für die maximale Dosiermenge. Der Drehkörper 2 wurde hier im Gegenuhrzeigersinn im Verschlusskörper 1 gedreht, bis sein Nocken 24 am Anschlagnocken 26 einen Anschlag fand. Dabei steht der Begrenzer 6 auf der Oberseite der Dosiervorrichtung in einer solchen Position, dass der Fortsatz 11 auf dem Dosierkoben 10 einen maximalen Weg zurücklegen kann. Es ist klar, dass alle Zwischenpositionen zwischen den beiden Anschlagnocken 26, 27 einstellbar sind.

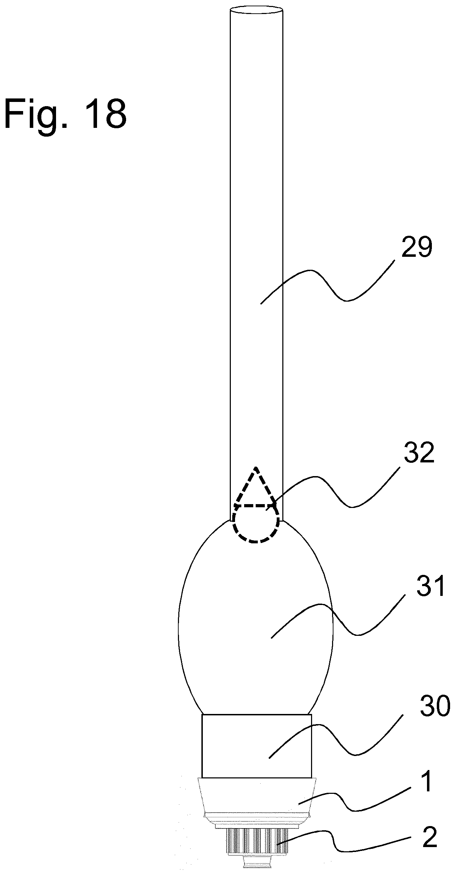

Die Figur 18 zeigt diese Dosiervorrichtung montiert am Ende eines Schlauches 29. Dieser Schlauch 29 ist in seinem Endbereich mit einem Balg 31 ausgerüstet, welcher über ein Schlauchventil 32 mit Flüssigkeit aus dem Schlauch 29 versorgt werden kann, wenn dieses Ventil 32 hierzu geöffnet wird. Dieses Ventil 32 stellt in geschlossenem Zustand sicher, dass beim Loslösen des zuvor zusammengedrückten Balges 31 keine Flüssigkeit aus dem Schlauch in den Balg 31 nachströmt. Der Balg 31 ist vorne mit einem Schlauchstutzen 30 ausgerüstet, aufweichen die Dosiervorrichtung mit seinem Vorrichtungskörper 1 und Drehkörper 2 genauso wie an einen Behälterstutzen dichtend aufsetzbar ist. Zum dosierten Ausgeben von Flüssigkeit, also Flüssigkeitsportionen, wird das Schlauchventil 32 geschlossen und der Balg 31 wird danach zusammengedrückt und wirkt genauso wie ein Behälter, wodurch der Flüssigkeitsdruck im Innern der Dosiervorrichtung deutlich höher wird als der Atmosphärendruck. Es wird eine Flüssigkeitsportion ausgegeben. Danach wird der Balg 31 losgelassen, sodass er elastisch in seine Ausgangsform zurückgeht. Dabei wird der Druck in seinem Innern reduziert, unterhalb des Atmosphärendrucks. Luft kann nun durch die Dosiervorrichtung ins Innere des Balges 31 strömen, wodurch sich die Dosierkammer mit Flüssigkeit aus dem Balg 31 erneut füllt. Das Nachfüllen des Balges 31 erfolgt durch Öffnen des Schlauchventils 32, wenn dieser geleert ist.

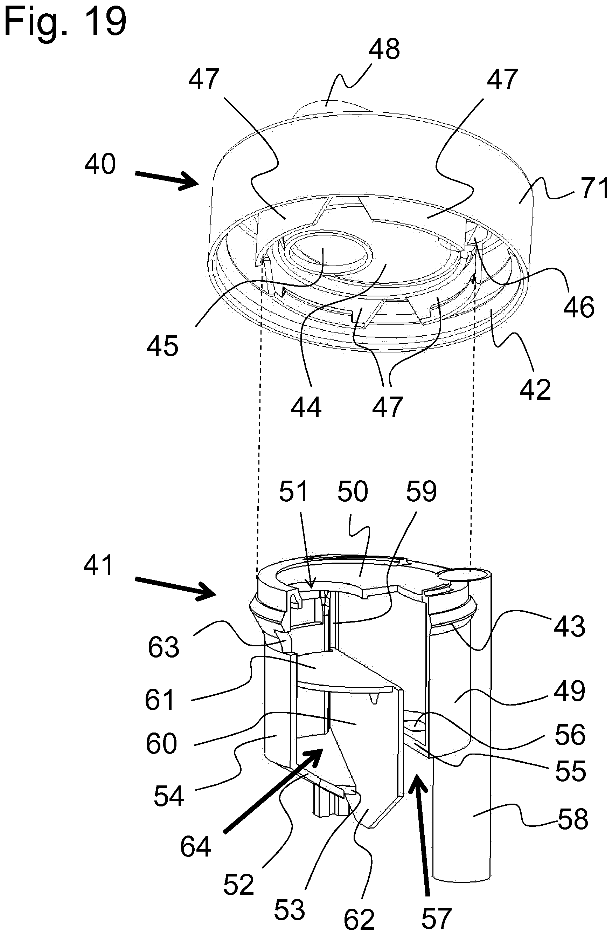

In der Figur 19 ist eine andere Konstruktion eines Dosierverschlusses dargestellt, die gemäss den Merkmalen des unabhängigen Patentanspruchs 1 ausgeführt ist. Aber diesem Dosierverschluss liegt die gleiche erfinderische Idee zugrunde, nämlich ebenfalls eine Dosier-Steuerkammer. Diese wird während der Ausgabe einer Dosierportion ebenfalls befüllt und wenn sie ganz voll ist, unterbindet sie den Ausfluss, wie nachfolgend beschrieben und erklärt wird. Gezeigt ist hier in Figur 19 oben ein Ausguss-Aufsatz 40 und darunter der eigentliche Verschlusskörper 41 des Dosierverschlusses. Beide Teile sind in aufrechter Lage dargestellt, in welcher sie zusammengesetzt auf den aufrechten auszurüstenden Behälterstutzen aufgesetzt werden, wobei man den Ausguss-Aufsatz 40 hier leicht von unten und den Verschlusskörper 41 leicht von oben betrachtet sieht. Der Ausguss-Aufsatz 40 bildet eine Kappe, in deren äusserer Umfangswand auf der Innenseite ein Wulst oder wie im hier gezeigten Beispiel ein Gewinde 42 angeformt ist. Mit diesem kann der Ausguss-Aufsatz 40 auf den auszurüstenden Stutzen aufgeschraubt werden. Das Zentrum des Ausguss-Aufsatzes 40 wird überspannt von einer Scheibe 44, die ein vom Zentrum radial nach aussen versetztes Ausgussloch 45 aufweist. Am Rand der Scheibe 44 befindet sich ein Belüftungsloch 46 mit freiem Durchgang von oben nach unten. Um die Scheibe 44 herum nach unten abstehend sind hier Wandsegmente 47 mit Rückhaltemittel auf ihrer Innenseite angeformt, zum Beispiel in Form von nach innen ragenden Wulsten. Mit diesen Rückhaltemitteln bzw. Wandsegmenten lässt sich der Ausguss-Aufsatz 40 von oben auf den Verschlusskörper 41 aufsetzen, wobei dann die Rückhaltemittel der Wandsegmente 47 über dem Wulst 43 einklicken, wonach die beiden als Spritzgussteile gefertigten Teile fest miteinander verbunden sind. Ganz oben am Ausguss-Aufsatz erkennt man noch den Ausguss-Schnabel 48.

Der Verschlusskörper bildet im Wesentlichen einen Zylinder 49, der oben von einer Scheibe 50 mit Ausgussloch 51 verschlossen ist. Im gezeigten Bild ist ein Wandstück der Zylinderwand weggeschnitten um den Blick in das Innere freizugeben. Auf der im Bild linken Seite führt die Zylinderwand 54 unten in eine zu ihr in einem Winkel verlaufende Bodenwand 52 über, ähnlich einer Trichterform, und zuunterst weist diese eine Öffnung 53 auf. Die Zylinderwand 54 bildet eine stationäre Seitenwand 54 einer Dosier-Steuerkammer, und die trichterförmige Wand bildet eine Bodenwand 52 dieser Dosier-Steuerkammer. Der Zylinder 49 auf der rechten Seite des Bildes weist eine ebene, rechtwinklig zur Zylinderachse verlaufende Bodenwand 55 auf, in welcher ein Loch 56 ausgenommen ist. Diese Bodenwand 55 reicht hier nicht ganz zum Zentrum des Zylinderdurchmessers und lässt somit einen Spalt 57 zur gegenüberliegenden trichterförmigen Bodenwand 52 frei. Ganz rechts im Bild erkennt man ein Belüftungsrohr 58, welches in die Zylinderwand integriert bis ans obere Ende des Zylinders 49 führt und unten über den Zylinder hinaus nach unten ragt. Auf zwei diametral einander gegenüberliegenden Seiten an der Innenwand des Zylinders 49 sind axial verlaufende Nuten 59 ausgeformt, von denen hier nur die eine sichtbar ist, während die andere weggeschnitten ist, aber genauso verläuft wie die hier sichtbare. Die Nuten 59 erstrecken sich über das untere Ende des Zylinders 59 hinaus nach unten. In diese beiden Nuten 59 ist eine darin axial im Zylinder 49 verschiebbare, ebene Seitenwand 60 eingesetzt, welche die verschiebbare Seitenwand 60 der Dosier-Steuerkammer 64 bildet. Ab dem oberen Rand dieser Seitenwand 60 erstreckt sich eine obere Deckenwand 61 im rechten Winkel radial nach aussen und schliesst an die Innenseite der stationären Seitenwand 54 an. Das untere Ende der ebenen Seitenwand 60 bildet ein Trapez 62, sodass in ganz nach oben verschobener Lage diese Seitenwand 60 bündig mit der trichterförmigen Bodenwand 52 deren inneren Rand überdeckt und abschliesst. Die axial verschiebbare Seitenwand 60 kann soweit nach oben verschoben werden, bis ihre obere Deckenwand 61 an der Scheibe 50 anschlägt. Dabei verschliesst diese Deckenwand 61 das Ausgussloch 51 in der Scheibe 50. Nach unten kann die axial verschiebbare Seitenwand 60 verschoben werden, bis der äussere, kreisbogenförmige Rand der oberen Deckenwand 61 am unteren Ende der stationären Seitenwand 54 angelangt ist und durch die nach innen verlaufende trichterförmige Bodenwand 52 gestoppt wird. Im oberen Endbereich der stationären Seitenwand 54 weist diese mindestens ein Fenster 63 auf, das sich längs des Umfangs der entsprechenden Zylinderwand erstreckt. Damit ist dieser Verschlusskörper in allen Teilen beschrieben. Die axial verlaufenden Seitenwände 54, 60 der Dosier-Steuerkammer 64 können allerdings ganze andere Formen aufweisen, müssen also nicht notwendigerweise eine Zylinderwand oder eine ebene Wand bilden. Einziges Erfordernis ist, dass die eine in axialer Richtung gegenüber der anderen verschiebbar ist und die Deckenwand 61 der verschiebbaren Seitenwand 60 mit der anderen, stationären Seitenwand 54 abschliesst und unten die Bodenwand 52 an der stationären Wand 54 mit der verschiebbaren Seitenwand 60 abschliesst, mindestens bis auf eine Öffnung 53.

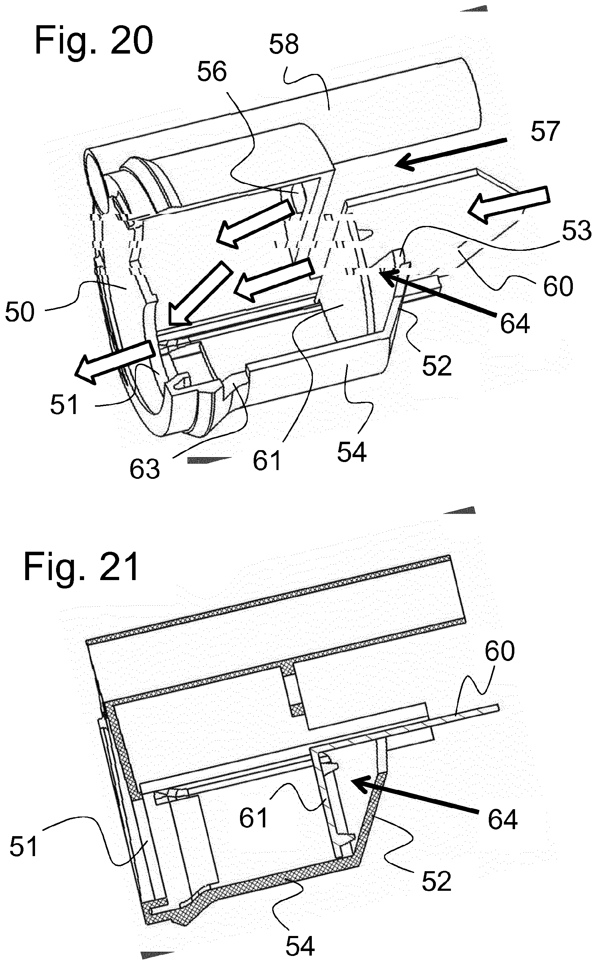

Die Funktion dieses Dosierverschlusses, wenn der Ausguss-Aufsatz 40 auf den Verschlusskörper 41 aufgesetzt ist, wird anhand der folgenden Figuren erklärt, in denen der Verschlusskörper des Dosierverschlusses in schiefwinkliger Ausgiesslage dargestellt ist. In Figur 20 ist er dabei zunächst im Zustand gezeigt, in dem er sich beim Start für die Ausgabe einer Dosierportion befindet. Die Dosis wird bestimmt durch den maximalen Inhalt der Dosier-Steuerkammer 64, wie das im Folgenden sogleich klar wird. Im Bild befindet sich die verschiebbare Seitenwand 60 ganz unten im Verschlusskörper bzw. im Bild ganz rechts. Die Deckenwand 61 schlägt unten an der trichterförmigen Bodenwand 52 an. Die Flüssigkeit strömt aus dieser Ausgangslage des Dosiervorganges von rechts unterhalb der verschiebbaren Seitenwand 60 durch die Öffnung 53 in die Dosier-Steuerkammer 64, welche hier von der stationären Seitenwand 54, der trichterförmigen Bodenwand 52, der verschiebbaren Deckenwand 61 und der verschiebbaren Seitenwand 60 gebildet wird. In der stationären Seitenwand 54 erkennt man in ihrem Bereich ganz links, das heisst im Verschlusskörper oben, einen Teil des Fensters 63 in der Zylinderwand dieser stationären Seitenwand 54. Die Flüssigkeit schiebt nun durch den von ihr ausgeübten Druck die Deckenwand 61 im Bild nach links bzw. im Verschlusskörper nach oben. Im gleichen Mass wächst linear das Volumen der Dosier-Steuerkammer 64, die sich im Zuge dieser Verschiebung der verschiebbaren Seitenwand 60 mit ihrer Deckenwand 61 füllt und vergrössert. Gleichzeitig strömt Flüssigkeit aus dem Behälter oberhalb der verschiebbaren Seitenwand 60 durch den dort gebildeten Spalt 57 und durch das Loch 56 von rechts nach links und schliesslich durch das Ausgussloch 51 nach aussen, wie mit Pfeilen eingezeichnet. Links im Bild erkennt man die den Verschlusskörper oben abschliessende Scheibe 50 mit ihrem Ausgussloch 51. Im Gegenzug zum Einströmen von Flüssigkeit in die Dosier-Steuerkammer 64 strömt Luft von aussen durch das Belüftungsrohr 58, im Bild von links nach rechts in den Behälter hinein.

In Figur 21 ist der Dosierverschluss bzw. sein Verschlusskörper, der ja in den Stutzen eines Behälters eingesetzt ist und von diesem eingefasst wird, in gleicher Schwenklage in einem Schnitt längs der Zylinderachse dargestellt. Man erkennt die vier Begrenzungsflächen für die von ihnen gebildete, im Volumen variable Dosier-Steuerkammer 64, nämlich die stationäre Seitenwand 54, deren Bodenwand 52, die verschiebbare Seitenwand 60 und ihre Deckenwand 61. Ausserdem sieht man links im Bild die Scheibe 50 und das Ausgussloch 51 darin.

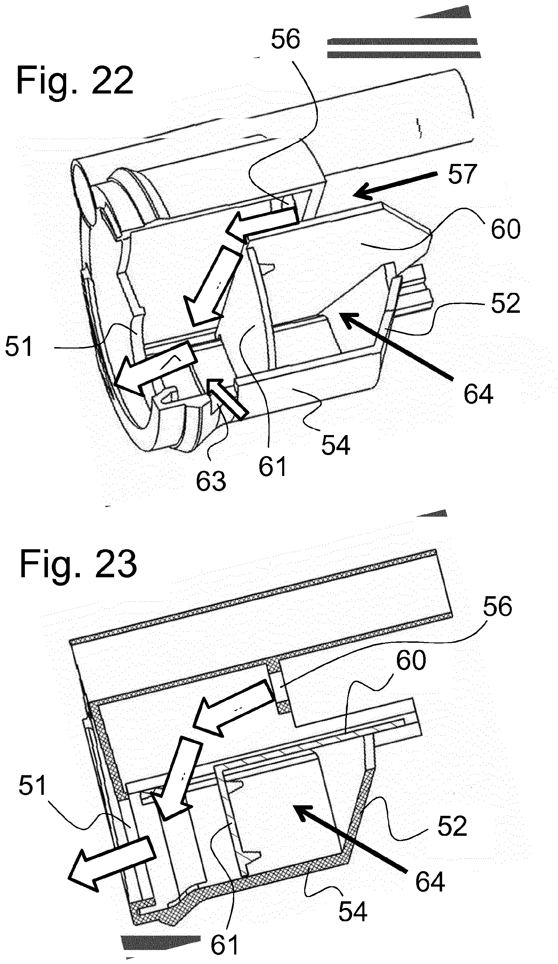

Die Figur 22 zeigt die Situation beim fortgeschrittenen Befüllen der Dosier-Steuerkammer 64, wenn die Bodenwand 61 an der variablen Seitenwand 60 etwa ihren halben möglichen Weg zurückgelegt hat, noch bevor ihre Deckenwand 61 das in Figur 22 sichtbare Fenster 63 in der stationären Seitenwand 54 überstrichen hat. Die verschiebbare Seitenwand 60 und ihre obere Deckenwand 61 wurden soweit im Verschlusskörper im Bild nach links verschoben. Die Dosier-Steuerkammer 64 wird immer weiter mit Flüssigkeit befüllt und während dieses Befüllens strömt oberhalb der Seitenwand 60 ständig an der im Volumen wachsenden Dosier-Steuerkammer 64 vorbei Flüssigkeit wie mit den Pfeilen eingezeichnet durch den Spalt 57 und das Loch 56 von rechts nach links und durch das Ausgussloch 51 nach aussen. Flüssigkeit kann ausserdem unterhalb des Verschlusskörpers zwischen ihm und dem damit ausgerüsteten Stutzen des Behälters im Bild von rechts nach links strömen und schliesslich durch das Fenster 63 und das Ausgussloch 51 nach aussen. Dasselbe sieht man in Figur 23 anhand des Schnittes längs der Zylinderachse des Verschlusskörpers.

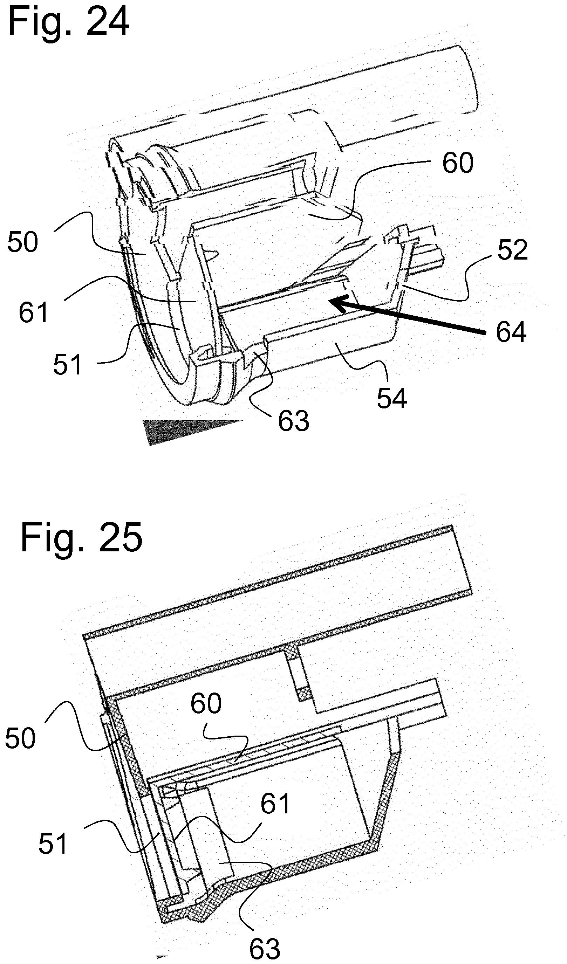

Die Figur 24 zeigt die Situation, wenn die variable Seitenwand 60 der Dosier-Steuerkammer und ihre Deckenwand 61 im Verschlusskörper im Bild maximal nach links verschoben wurden. Im letzten Abschnitt überstrich die Deckenwand 61 das Fenster 63. Sobald dieses Fenster 63 von der Deckenwand 61 passiert wurde, kann Flüssigkeit auch von unten durch dieses Fenster 63 zwischen Stutzen und Verschlusskörper aus dem Behälter in die Dosier-Steuerkammer 64 einströmen und beschleunigt damit das Verschieben der Deckenwand 61 nach links, sodass diese das Ausgussloch 51 rasch verschliesst. Die Figur 25 zeigt diese gleiche Situation in einem Schnitt längs der Zylinderachse. Die Deckenwand 61 liegt satt unten an der Scheibe 50 an und verschliesst das Ausgussloch 51 in der Scheibe 50. In dieser Abbildung ist auch das Fenster 63 in der Seitenwand 54 bzw. Zylinderwand im Bereich des im Bild hinteren Teils der stationären Seitenwand 54 nach dem Ausguss-Loch 51 zu erkennen.

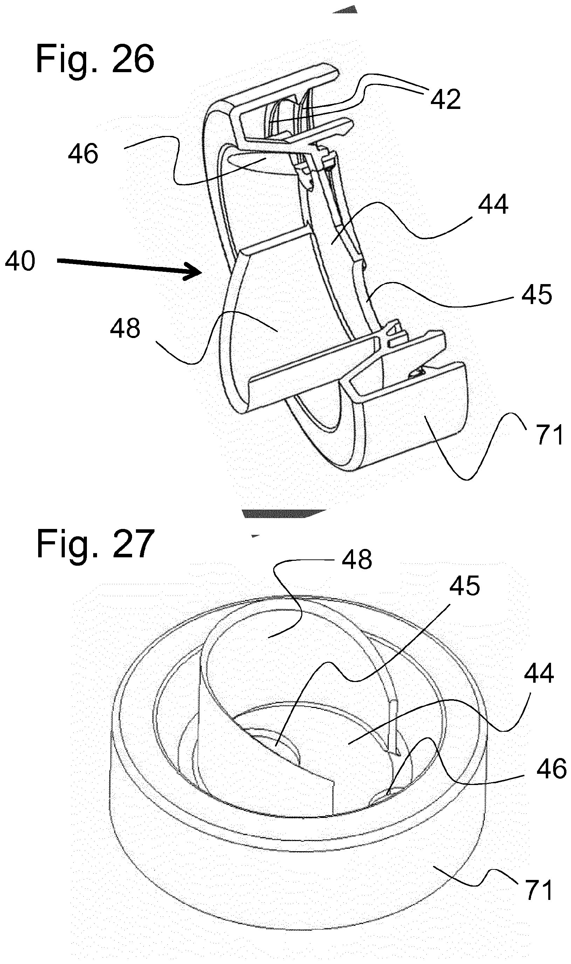

In Figur 26 ist der Ausguss-Aufsatz 40 gesondert in Ausgiesslage dargestellt, mit einem Stück herausgeschnitten, um den Blick ins Innere freizugeben. Das Ausgussloch 45 in der Scheibe 44 führt in einen Ausguss-Schnabel 48, der das Loch 45 auf seiner unteren Seite umfasst. Man erkennt hier auch das Innengewinde 42 zum Aufschrauben des Ausguss-Aufsatzes 40 auf einen Behälterstutzen. Und in Figur 27 ist der Ausguss-Aufsatz von schräg oben gesehen dargestellt, mit Ausguss-Schnabel 48, Ausgussloch 45 in der Scheibe 44 und dem Belüftungsloch 46 im Randbereich der Scheibe 44. Typischerweise wird mit diesem DosierVerschluss also dosiert, indem eine Dosier-Steuerkammer bei der Ausgabe einer Dosierportion befüllt wird, und wenn der Behälter mit dem Dosierverschluss wieder in eine aufrechte Lage zurückgeschwenkt wird, wird diese Dosier-Steuerkammer in umgekehrter Fliessrichtung der Füllung wieder entleert und die verschiebbare Seitenwand 60 mit ihrer Deckenwand 61 kehrt in ihre Ausgangslage zurück.

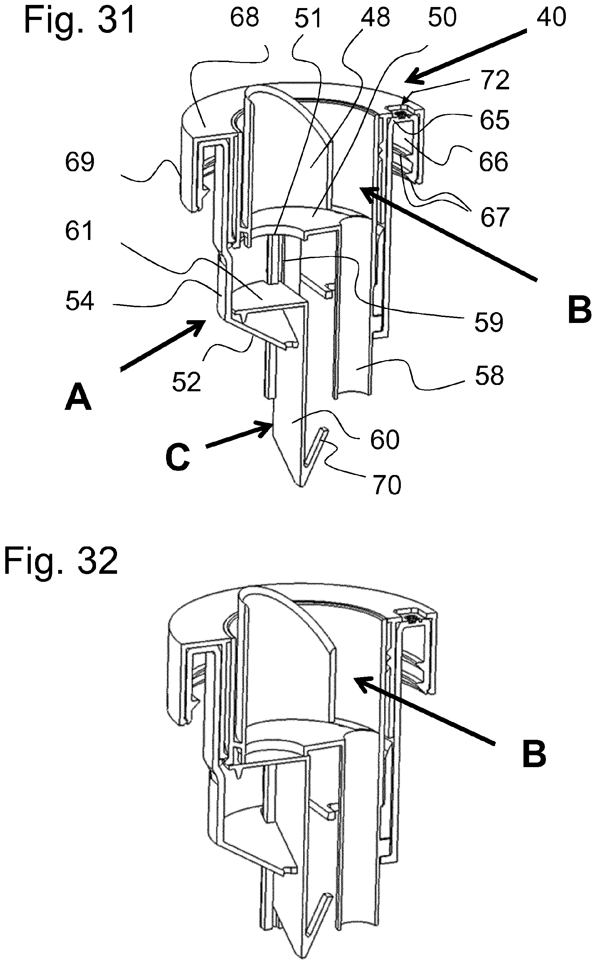

In den Figuren 31 bis 35 ist eine ganz besondere Ausführung dieses Dosierverschlusses dargestellt, jeweils in einem Teilschnitt, um den Blick in das Innere freizugeben. Diese Ausführung erlaubt eine stufenlose Einstellung des Dosiervolumens bzw. des Volumens der Dosier-Steuerkammer zwischen einem Minimum und einem Maximum, und ausserdem auch die Einstellung von Zwischenlagen, in denen der Dosierverschluss einen freien Ausfluss ohne Dosierung gewährleistet. Hierzu ist der Verschlusskörper mit seiner verschiebbaren Seiten- und Deckenwand dreiteilig ausgeführt. Da ist zunächst ein erster Teil A mit der stationären Seitenwand 54 und der Bodenwand 52, und dieser Teil A ist in den Stutzen eines auszurüstenden Behälters einsetzbar, indem er oben einen auskragenden Rand 65 und eine an deren Peripherie nach unten ragende Umfangswand 66 aufweist, die mit einem Innengewinde 67 ausgerüstet ist. Auf dieses obere Ende des Teils A ist ein Verstellring 68 aufgesetzt, welcher sich auf der Innenseite des Teils A längs dessen Innenwand nach unten erstreckt, oben auf dem Rand 65 aufliegt und aussen mit einer eigenen Umfangswand 69 auf der Umfangswand 66 des Teils A anliegt und diese einschliesst. Dieser Verstellring 68 lässt sich um die Achse des Verschlusskörpers verdrehen, wodurch der Teil B, der sich im Innern des Teils A befindet, über eine schraubenlinienförmige Führungsrille in axialer Richtung nach oben oder nach unten verschieben lässt, indem der Teil B sich aber nicht verdrehen lässt. In der Deckelfläche des Verstellrings 68 ist ein Fenster 72 ausgenommen, durch welches seine Einstelllage gegenüber dem darunter liegenden Teil A angezeigt wird. Der Teil B bildet die beidseitigen Nuten 59 für die Führung der verschiebbaren Seitenwand 60 und deren Deckenwand 61 als drittes Teil C. Ausserdem ist auch das Belüftungsrohr 58 vom Teil B gebildet, sowie die obere Scheibe 50 und ihr Ausgussloch 51. Dieser Dosierverschluss funktioniert nach dem gleichen Prinzip wie jener nach den Figuren 19 bis 30. Im Unterschied zu dieser Ausführung nach den Figuren 19 bis 30 aber lässt sich durch axiales Verschieben des Teils B die Grösse der variablen Dosier-Steuerkammer durch Verdrehen des Einstellringes 68 variieren.

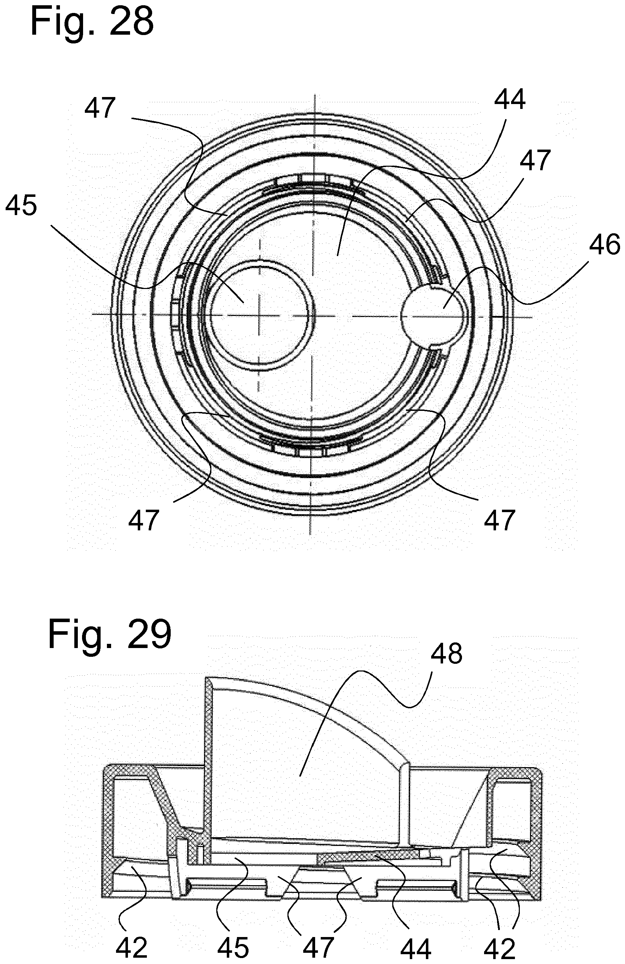

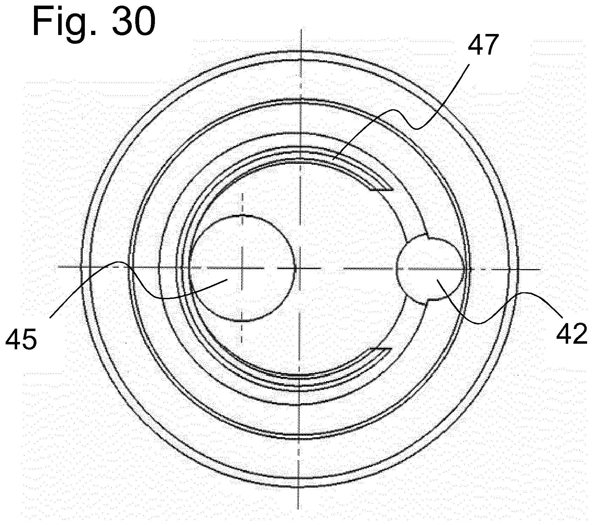

In Figur 28 sieht man den Ausguss-Aufsatz in einer Ansicht von unten. Nebst der Scheibe 44 mit Ausguss-Loch 45 und Belüftungsloch 46 erkennt man die Wandelemente 47 mit ihren Rückhaltemitteln zum Aufklicken des Ausguss-Aufsatzes auf den Verschlusskörper. Die Figur 29 zeigt den Ausguss-Aufsatz in einem diametralen Schnitt dargestellt. Nebst den schon erwähnten Elementen sieht man hier den Gewindegang des Innengewindes 42 sowie auch den Ausguss-Schnabel 48. In Figur 30 schliesslich ist der Ausguss-Aufsatz von oben gesehen dargestellt. Um das Ausgussloch 45 erkennt man den Ausguss-Schnabel 47.

Die Figuren 31 bis 36 zeigen die im Prinzip gleich funktionierende Dosiervorrichtung, jetzt aber in einer Ausführung, welche die Einstellung bzw. Veränderung der Dosiermenge erlaubt. Hierzu ist der Verschlusskörper in zwei Teilen A und B ausgeführt, und Teil B ist gegenüber dem Teil A verschiebbar ausgeführt. In Figur 31 und 32 ist die Situation gezeigt, in welcher der Dosierverschluss für eine kleinste Dosiermenge eingestellt ist. Das Teil B ist hierzu in eine maximal tiefe Lage in den Verschlusskörper hinein verschoben. Für die verschiebbare Seitenwand 60 und ihre Deckenwand 61 bleibt nur ein geringer Verschiebeweg erhalten. Die Figur 31 zeigt die variable Seitenwand 60 mit ihrer Deckenwand 61 in Ausgangslage und Figur 32 in ihrer Endlage zum Stoppen des Ausflusses durch Überdecken bzw. Verschliessen des Ausgussloches 51 in der Scheibe 50.

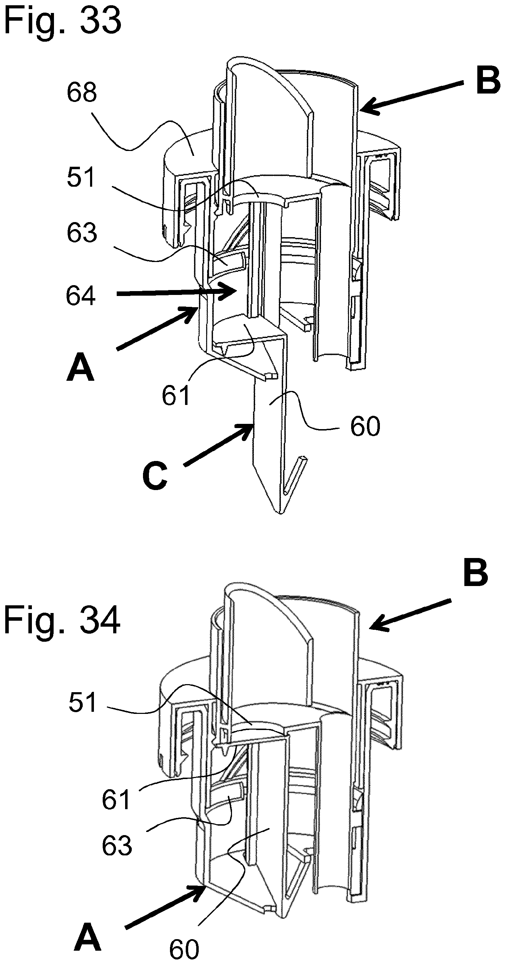

Das Teil B kann durch Verdrehen des Einstellringes weiter in axialer Richtung aus dem Teil A nach oben bzw. nach aussen ausgefahren werden, für die Einstellung einer maximalen Dosiermenge, wie das in Figur 33 und 34 gezeigt ist. Entsprechend erhält die verschiebbare Seitenwand 60 mit ihrer Deckenwand 61 einen grösseren Verschiebeweg. Figur 33 zeigt die Dosier-Steuerkammer in Ausgangslage. Bei der Ausgabe einer Dosierportion wird sie befüllt und die verschiebbare Seitenwand 60 mit ihrer Deckenwand 61 verschiebt sich nach aussen und die Deckenwand 61 überdeckt schliesslich das Ausgussloch und stoppt damit den Ausfluss. In den Figuren 33 und 34 erkennt man auch die Fenster 63 in der stationären Seitenwand am Teil A.

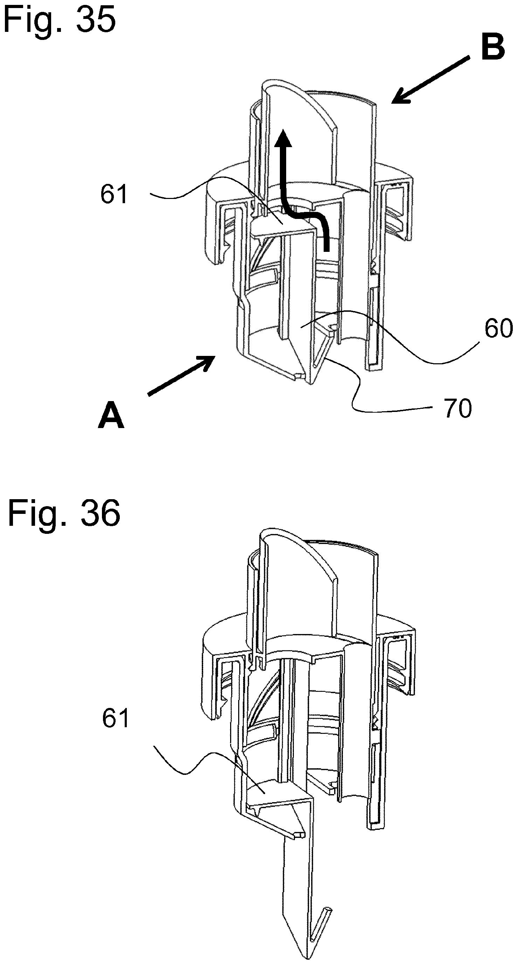

In den Figuren 35 und 36 ist die Einstellung für ein undosiertes, stetiges Ausgiessen dargestellt. Hierzu ist der Teil B noch weiter im Teil A nach aussen verschoben worden, wiederum durch Drehen am Einstellring 28. Die Figur 36 zeigt die Ausgangslage der verschiebbaren Seitenwand 60 und Deckenwand 61 der Dosier-Steuerkammer. Ab dieser Lage wird der Behälter in Ausgiesslage geschwenkt. Die verschiebbare Seitenwand 60 und ihre Deckenwand 61 verschieben sich, angetrieben durch die ausfliessende Flüssigkeit, nach aussen, bis die Position der variablen Seitenwand 60 und ihrer Deckenwand 61 wie in Figur 35 gezeigt erreicht ist. Die Seitenwand 60 trägt an ihrem unteren Ende einen aussen nach oben abstehenden Fortsatz 70, der als Anschlag dient. Wenn nämlich das Teil B so weit aus dem Teil A ragt, schlägt die verschiebbare Seitenwand 60 mit diesem Fortsatz 70 in ausgefahrener Lage am Teil A an und verhindert ein weiteres Verschieben nach aussen. Es bleibt somit ständig eine Durchflussöffnung frei, weil die Deckenwand 61 in einem Abstand zum Ausgussloch 51 stehenbleibt.

### Ziffernverzeichnis

- 1: Vorrichtungskörper
- 2: Drehkörper
- 3: Ausguss
- 4: hohlzylindrischer Becher
- 5: Fortsatz auf Dosierkolben
- 6: schraubenlinienförmiger Begrenzer
- 7: Schliesskappe
- 8: Filmscharnier
- 9: Rand des Vorrichtungskörpers zum Einrasten der Schliesskappe
- 10: Dosierkolben
- 11: ebener Fortsatz auf Dosierkolben
- 12: Fenster in hohlzylindrischem Becher
- 13: Deckel am Becher
- 14: Einschnitte am Becherdeckel 13
- 15: Deckel am hohlzylindrischen Dosierkolben 10
- 16: seitliche Rippe am Dosierkolben
- 17: Schrägfläche an Rippe 16
- 18: Rippe vorne an stuhlförmigem Dosierkolben
- 19: Hohlzylinder am Dosierkolben 10
- 20: seitliche Rändern 20 in die Einschnitte 14 am Deckel 13
- 21: Raum 21 unterhalb des Dosierkolbens 10
- 22: Behälter, Flasche
- 23: Innenrand des Ausgusses 3
- 24: Nocken als Verstellwegbegrenzer
- 25: nach innen verkürzter Rand des Deckels 13
- 26: Erster Anschlagnocken am Verschlusskörper 1
- 27: Zweiter Anschlagnocken am Verschlusskörper 1
- 28: schraubenlinienförmiger Steg am Begrenzer 6
- 29: Schlauch
- 30: Schlauchstutzen
- 31: Balg
- 32: Schlauchventil
- 40: Ausguss-Aufsatz
- 41: Verschlusskörper
- 42: Gewinde an Ausguss-Aufsatz
- 43: Wulst an Verschlusskörper
- 44: Scheibe an Ausguss-Aufsatz
- 45: Ausgussloch in Scheibe 44
- 46: Belüftungsloch an 40
- 47: Wandsegmente mit Rückhaltemitteln
- 48: Ausguss-Schnabel
- 49: Zylinder des Verschlusskörpers
- 50: Scheibe am Verschlusskörper
- 51: Ausgussloch in der Scheibe 50
- 52: trichterförmige Bodenwand
- 53: Öffnung unten in 52
- 54: Zylinderwand/stationäre Seitenwand der Dosier-Steuerkammer
- 55: Bodenwand am Verschlusskörper ausserhalb der Dosier-Steuerkammer
- 56: Loch in 55
- 57: Spalt ausserhalb von verschiebbarer Seitenwand 60
- 58: Belüftungsrohr
- 59: Nuten für die Führung der Seitenwand 60
- 60: axial verschiebbare Seitenwand
- 61: Deckenwand an Seitenwand 60
- 62: trapezförmiges unteres Ende der Seitenwand 60
- 63: Fenster in Zylinderwand 54
- 64: Dosier-Steuerkammer
- 65: Auskragender Rand am Teil A
- 66: Umfangswand aussen am Rand 65
- 67: Innengewinde innen an Umfangswand 66
- 68: Einstellring
- 69: Umfangswand an Einstellring
- 70: Fortsatz an verschiebbarer Wand
- 71: Umfangswand Ausguss-Aufsatz 40
- 72: Fenster in Einstellring 68, zur Anzeige der Verstell-Lage

## Patentansprüche

1. Dosiervorrichtung, ausgeführt zur Ausgabe einer Dosierportion aus einem Behälter oder Schlauch mit Stutzen, umfassend einen auf den Stutzen aufschraub- oder aufprellbaren, wahlweise mit separatem Deckel verschliessbaren Ausguss-Aufsatz (40) mit daran gehaltenem zylindrischem Verschlusskörper (41) mit Ausgussloch (51), welcher zur Ausgabe der Dosierportion ein aus zwei Wänden bestehendes bewegliches Teil (60, 61) enthält, wobei das bewegliche Teil zusammen mit zwei stationären Wänden (52, 54) des Verschlusskörpers (41) eine Dosier-Steuerkammer (64) im Verschlusskörper (41) bildet, die bei der Ausgabe einer Dosierportion von leer zu voll befüllt wird,
**dadurch gekennzeichnet, dass** die Dosier-Steuerkammer (64) gebildet und begrenzt ist von zwei aneinander angrenzenden stationären Wänden (52, 54) des Verschlusskörpers (41), deren eine (54) parallel zur Längsachse des Verschlusskörpers (41) verläuft und mit der anderen stationären Wand (52) einen Winkel von wenigstens ca. 90° einschliesst, und zwei längs der Längsachse des Verschlusskörpers (41) verschiebbaren Wänden (60, 61) des beweglichen Teils, die einen Winkel von ca. 90° einschliessen, wobei die zwei verschiebbaren Wände (60, 61) beim Start einer Dosisausgabe in einer Ausgangslage innerhalb ihres Verschiebeweges maximal vom Ausgussloch (51) entfernt sind, und bei der Ausgabe der Dosierportion in Richtung zum Ausgussloch (51) hin bewegbar sind, und eine (61) der zwei verschiebbaren Wände (60, 61) bei aufgefüllter Dosier-Steuerkammer das Ausgussloch (51) verschliesst, wodurch die auszugebende Dosis begrenzt wird, und die Dosier-Steuerkammer nach der Ausgabe der Dosierportion durch Zurückschwenken der Dosiervorrichtung in eine aufrechte Lage des Behälters und dem dadurch induzierten Zurückbewegen des beweglichen Teils im Verschlusskörper in seine Ausgangslage wieder in den Behälter oder Schlauch entleert werden kann.

2. Dosiervorrichtung, ausgeführt zur Ausgabe einer Dosierportion aus einem Behälter oder Schlauch mit Stutzen, wobei die Dosiervorrichtung einen auf den Stutzen aufschraub- oder aufprellbaren, wahlweise mit einem separaten Deckel verschliessbaren Verschlusskörper (1) mit Ausguss (3) umfasst, wobei die Dosiervorrichtung als bewegliches Teil eines Dosiermittels einen beweglichen Dosierkolben (10) umfasst, welcher einen Deckel (15) sowie eine auf der dem Behälter zugewandten Seite des Dosierkolbens liegende Seitenwand (5) aufweist,
**dadurch gekennzeichnet, dass** die Dosiervorrichtung einen stationären Becher (4) umfasst, in den der Dosierkolben (10) eingesteckt ist, wobei das Dosiermittel eine Dosier-Steuerkammer (64) mit variablem Volumen umfasst, welche Dosier-Steuerkammer (64) in einer Ausgiesslage oberhalb des Deckels (15) des Dosierkolbens (10) liegt, wobei die Dosier-Steuerkammer (64) dazu ausgeführt ist, beim Ausgiessen der Dosiervorrichtung von leer zu voll befüllt zu werden, und wobei die Dosier-Steuerkammer (64) von zwei stationären (4, 24) und zwei in Axialrichtung zum Stutzen verschiebbaren Wänden (10, 15) begrenzt wird, indem zwei zueinander parallel verlaufende, axial zum Stutzen verlaufende Seitenwände (4; 10) vorhanden sind, wobei eine Seitenwand (10) gegenüber der anderen Seitenwand (4) in axialer Richtung zum Stutzen verschiebbar gelagert ist und durch die Seitenwand des Dosierkolbens (10) gebildet ist und wobei die andere stationäre Seitenwand (4) durch eine Umfangswand des Bechers gebildet wird, wobei die stationäre Seitenwand (4) an ihrer dem Behälter zugewandten Seite eine zu ihr in einem Winkel abstehende Bodenwand (24) bildet, welche an die bewegliche Seitenwand (15) anschliesst, und die bewegliche Seitenwand (15) an ihrem der Mündung des Stutzens zugewandten Ende eine zu ihr in einem Winkel abstehende Deckenwand bildet, welche durch den Deckel (15) des Dosierkolbens gebildet ist und welche an die stationäre Seitenwand (4) anschliesst, wobei das von allen vier Wänden (4, 24; 10, 15) umschlossene variable Volumen die Dosier-Steuerkammer (64) bildet, wobei der Dosierkolben (10) zwischen einer obersten Stellung und einer untersten Stellung in dem Becher bewegbar ist, wobei in der obersten Stellung des Dosierkolbens (10) innerhalb des Bechers der Deckel (15) des Dosierkolbens (10) auf der Bodenwand (24) der Dosier-Steuerkammer (64) aufliegt und die Dosier-Steuerkammer (64) entleert ist, während der Dosierkolben (10) gegenüber dem Becher weitgehend abgedichtet ist, wobei die Dosier-Steuerkammer (64) durch erhöhten Druck aus dem Behälter oder Schlauch befüllbar ist, indem unter Abwärtsbewegen des Dosierkolbens (10) und gleichzeitiger Ausgabe der Dosierportion der Dosierkolben (10) von der obersten Stellung in die unterste Stellung in dem Becher bewegbar ist, wobei der untere Rand des Dosierkolbens (10) in seiner untersten Position den Ausguss (3) verschliesst, wobei der Dosierkolben (10) in seiner untersten Position eine Schwenkbewegung vollführen kann, so dass er gegenüber dem Becher nicht mehr abgedichtet ist, wobei unter Aufwärtsbewegen des Dosierkolbens (10) durch Unterdruck im Behälter oder Schlauch der Dosierkolben (10) wieder von der untersten Stellung in die oberste Stellung in dem Becher bewegbar ist.

3. Dosiervorrichtung nach Anspruch 1, **dadurch gekennzeichnet, dass** der Verschlusskörper (41) zylindrisch gestaltet ist, zum Einsatz in das Innere eines Stutzens, und die Dosier-Steuerkammer (64) im Innern des Verschlusskörpers (41) asymmetrisch gestaltet ist, indem ihr Querschnitt rechtwinklig zum zylindrischen Verschlusskörper (41) ein Segment eines Kreises bildet, wobei der kreisrunde Teil von der stationären Seitenwand (54) des Verschlusskörpers (41) gebildet ist, und die Sekante von der verschiebbaren Seitenwand (60), und diese verschiebbare Seitenwand (60) mit ihren beiden Seitenrändern in axial zum Stutzen verlaufenden Nuten (59) am Verschlusskörper (41) geführt ist, und dass auf der Seite der verschiebbaren Seitenwand (60), die der Dosier-Steuerkammer abgewandt ist, der Verschlusskörper (41) unten bis auf mindestens eine Durchflussöffnung (57) an die verschiebbare Seitenwand (60) anschliesst und ein in axialer Richtung verlaufendes Belüftungsrohr (58) einschliesst, das sich mindestens über die ganze Höhe des Verschlusskörpers (41) erstreckt.

4. Dosiervorrichtung nach Anspruch 3, **dadurch gekennzeichnet, dass** der Verschlusskörper (41) mit seinem oberen, kreisrunden Rand in einen Ausguss-Aufsatz (40) einsetzbar ist, welcher eine durchgehende, orthogonal zur Verschlusskörperachse verlaufenden Scheibe (44) aufweist, mit einem Ausguss-Loch (45), welches nach Aufsetzen des Ausguss-Aufsatzes (40) auf den Verschlusskörper (41) mit dem Ausgussloch (51) in der Scheibe (50) am Verschlusskörper (41) fluchtet, während die Scheibe (44) am Ausguss-Aufsatz (40) an ihrer Peripherie ein Belüftungsloch (46) aufweist, welches mit dem oberen Ende des Belüftungsrohres (58) am Verschlusskörper (41) fluchtet, und weiter dass an der Aussenseite der Scheibe (44) des Ausguss-Aufsatzes (40) ein Ausguss-Schnabel (48) angeformt ist.

5. Dosiervorrichtung nach Anspruch 1, **dadurch gekennzeichnet, dass** der Verschlusskörper (41) auf der Seite der Dosier-Steuerkammer im oberen Randbereich längs des Umfangs mindestens ein Fenster (63) aufweist, zur schlagartigen Füllung der Dosier-Steuerkammer (64) in der Endphase ihrer Befüllung bei der Ausgabe einer Dosierportion, sodass die Deckenwand (61) der Dosier-Steuerkammer (64) das Ausgussloch (51) in der Scheibe (50) verschliesst.

6. Dosiervorrichtung nach einem der Ansprüche 1 oder 5, **dadurch gekennzeichnet, dass** der Verschlusskörper (41) oben einen bis auf die Mündung des Belüftungsrohres (58) kreisförmigen Rand aufweist, welcher auf der Unterseite des Ausguss-Aufsatzes (40) in eine entsprechende kreisförmige Nut einsetzbar ist und in dieser an ausgeformten Wandsegmenten (47) mit Rückhaltemitteln einklickbar ist, wobei radial ausserhalb der Scheibe (44) eine Kappe gebildet ist, deren periphere Umfangswand (71) auf ihrer Innenseite mit einem Innengewinde (42) oder mit einem Wulst ausgerüstet ist, zum Aufschrauben oder Aufprellen auf einen auszurüstenden Stutzen eines Behälters oder Schlauches.

7. Dosiervorrichtung nach einem der Ansprüche 1 bis 6, **dadurch gekennzeichnet, dass** der Verschlusskörper (41) aus drei Teilen (A, B und C) besteht, nämlich aus einem ersten Teil (A) mit der stationären Seitenwand (54) und der Bodenwand (52), und dieser Teil (A) in den Stutzen eines auszurüstenden Behälters einsetzbar ist, indem er oben einen auskragenden Rand (65) und eine an deren Peripherie nach unten ragende Umfangswand (66) aufweist, die mit einem Innengewinde (67) ausgerüstet ist, und dass auf das obere Ende dieses ersten Teils (A) ein Verstellring (68) aufgesetzt ist, welcher sich auf der Innenseite des ersten Teils (A) längs dessen Innenwand nach unten erstreckt, oben auf dem Rand (65) aufliegt und aussen mit einer eigenen Umfangswand (69) auf der Umfangswand (66) des ersten Teils (A) anliegt und diese einschliesst, und wobei dieser Verstellring (68) um die Achse des Verschlusskörpers verdrehbar ist, wodurch ein zweiter Teil (B), der sich im Innern des ersten Teils (A) befindet, über eine schraubenlinienförmige Führungsrille in axialer Richtung nach oben oder nach unten verschiebbar ist, indem der zweite Teil (B) nicht verdrehbar ist, wobei der Hub des dritten Teils (C), nämlich der verschiebbaren Seitenwand (60) mit Deckenwand (61) variierbar und somit die Dosis zwischen einem Minimum und einem Maximum stufenlos einstellbar ist.

8. Dosiervorrichtung nach Anspruch 7, **dadurch gekennzeichnet, dass** am dritten Teil (C), nämlich der verschiebbaren Seitenwand an ihrem unteren Ende ein nach oben ragender Fortsatz (79) angeformt ist, der bei oberster Einstelllage des zweiten Teils (B) im Einstellring (68) am ersten Teil (A) einen Anschlag findet, sodass die Deckenwand (61) der verschiebbaren Seitenwand (60) einen Abstand zum Ausgussloch (51) bildet und die kontinuierliche Ausgabe einer Dosierportion erlaubt.

9. Dosiervorrichtung nach Anspruch nach einem der Ansprüche 7 oder 8, **dadurch gekennzeichnet, dass** in der Deckelfläche des Verstellrings (68) ein Fenster (72) ausgenommen ist, zur Freigabe des Blicks auf den unter dem Verstellring (68) liegenden auskragenden Rand (65) des ersten Teils (A) und damit die Einstelllage gegenüber dem darunter liegenden ersten Teil (A) anzeigbar ist.

10. Dosiervorrichtung nach Anspruch 2, **dadurch gekennzeichnet, dass** sie einen Verschlusskörper (1) mit dichtenden Schliessmitteln (7) einschliesst, wobei die Dosiermittel aus einzig zwei Bauteilen bestehen, nämlich einem fest im Verschlusskörper (1) sitzenden, hohlen Becher (4) mit Boden (24) und auf der Bodenseite des Bechers (4) in seiner Seitenwand angeordnetem Fenster (12), zur Bildung von zwei stationären Begrenzungswänden (4, 24) einer Dosier-Steuerkammer (64), sowie einem kappenförmigen Dosierkolben (10) mit einem auf der Oberseite der Kappe sich in axialer Richtung erstreckenden Fortsatz (5, 11), welcher Dosierkolben (10) mit Fortsatz (5, 11) in den Becher (4) einpasst und hierbei sein Fortsatz (5, 11) das Fenster (12) überdeckt und schliesst und somit zwei verschiebbare Begrenzungswände (15, 5) der Dosier-Steuerkammer (64) bildet, wobei der Dosierkolben (10) im Becher (4) axial bewegbar und mit seinem Fortsatz (5, 11) gegen die Aussenseite des Fensters (12) hin mit einem begrenzten Mass schwenkbar ist, sodass er in ausgeschwenktem Zustand mit dem Becher (4) ein geöffnetes Ventil bildet und dabei sein unterer Rand den Becher (4) um eine Distanz (D2) überlappt.

11. Dosiervorrichtung nach Anspruch 10, ***dadurch gekennzeichnet,* dass** der Becher (4) einen Hohlzylinder bildet, und dass der kappenförmige Dosierkolben (10) eine zylindrische Form aufweist, mit einem auf der Oberseite der Kappe sich in axialer Richtung erstreckenden Fortsatz (5) der eine Verlängerung der zylindrischen Wand über ein Winkelsegment von 90° bis 200° bildet.

12. Dosiervorrichtung nach Anspruch 10, ***dadurch gekennzeichnet,* dass** der Becher (4) einen Hohlzylinder bildet, und dass der kappenförmige Dosierkolben (10) eine zylindrische Form aufweist, mit einem auf der Oberseite der Kappe sich in axialer Richtung erstreckenden Fortsatz (11) der als Sekante über den Deckel (15) des zylindrischen Dosierkolbens (10) verläuft.

13. Dosiervorrichtung nach Anspruch 11, ***dadurch gekennzeichnet,* dass** das Fenster am Becher (4) gebildet ist, indem im unteren Bereich des Bechers seine Umfangswand auf einer Seite weggeschnitten und der Boden (13) des Bechers (4) am Aussenrand entsprechend um die Wandstärke der Umfangswand im Radius reduziert ist, wobei sich Einschnitte (14) in Wandstärke beidseits in den Boden (13) hinein ein stückweit fortsetzen, und dass der Fortsatz (5) auf dem Deckel (15) des Dosierkolbens (10) einen Halbzylinder bildet, der dieses Fenster im Zustand, wenn der Fortsatz (5) über dem Fenster liegt, verschliesst.

14. Dosiervorrichtung nach Anspruch 11, ***dadurch gekennzeichnet,* dass** das Fenster am Becher (4) gebildet ist, indem im bodenseitigen Bereich des Bechers annähernd bis die Hälfte seiner einen Seite weggeschnitten ist, und dass der Fortsatz (11) auf dem Deckel (15) des Dosierkolbens (10) eben ist und so angeordnet ist, dass dieses Fenster im Zustand, wenn der Fortsatz (11) über dem Fenster liegt, dieses verschliesst.

15. Dosiervorrichtung nach einem der Ansprüche 2 oder 10 bis 14, ***dadurch gekennzeichnet,* dass** sie im Vorrichtungskörper (1) einen den Becher (4) und den Dosierkolben (10) umfassenden Drehkörper (2) einschliesst, der einen über den Becherboden hinausragenden Begrenzer (6) in Form eines stetig oder unstetig ansteigenden Steges (28) aufweist, welcher für den im Becher (4) aufwärts bewegbaren Dosierkolben (10) mit seinem Fortsatz (11) einen Anschlag bildet, wobei der Drehkörper (2) im Vorrichtungs- bzw. Verschlusskörper (1) verdrehbar ist, sodass der Fortsatz (11) mit seinem oberen Rand je nach Drehlage des Begrenzers (6) an verschiedenen Stellen an der Unterseite des Steges (28) anschlägt, und dass der Drehkörper (2) an seinem Umfang einen radial abstehenden Nocken (24) aufweist, welcher zwischen zwei gegenüberliegenden, nach innen ragenden Anschlagnocken (26,27) am Vorrichtungskörper oder Verschlusskörper (1) hin und her drehbar ist, sodass der Drehbereich des Drehkörpers (2) zwischen einer Einstellung für eine maximale Dosis und eine minimale Dosis stufenlos einstellbar beschränkt ist.

## Claims

1. A metering device, designed to dispense a metered portion from a container or hose with a nozzle, comprising a spout attachment (40) which can be screwed or snapped onto the nozzle, optionally can be closed with a separate lid and has a cylindrical closure body (41) held thereon having a spout hole (51), which contains a movable part (60, 61) consisting of two walls for dispensing the metered portion, wherein the movable part together with two stationary walls (52, 54) of the closure body (41) forms a metering control chamber (64) in the closure body (41), said metering control chamber being filled from empty to full when a metered portion is dispensed, **characterised in that** the metering control chamber (64) is formed and delimited by two adjoining stationary walls (52, 54) of the closure body (41), of which one (54) extends parallel to the longitudinal axis of the closure body (41) and with the other stationary wall (52) forms an angle of at least approximately 90°, and two walls (60, 61) of the movable part which are displaceable along the longitudinal axis of the closure body (41) and which form an angle of approximately 90°, wherein the two displaceable walls (60, 61) at the start of metering in a starting position within the displacement path thereof are at a maximum distance from the spout hole (51), and can be moved towards the spout hole (51) when the metered portion is dispensed, and one (61) of the two displaceable walls (60, 61) closes the spout hole (51) when the metering control chamber is full, as a result of which the metered amount to be dispensed is limited, and after the metered portion has been dispensed, the metering control chamber can be emptied into the container or hose by the pivoting of the metering device back into an upright position of the container and the backward movement, induced thereby, of the movable part in the closure body into the starting position thereof again.

2. The metering device, designed to dispense a metered portion from a container or hose with a nozzle, wherein the metering device comprises a closure body (1) which can be screwed or snapped onto the nozzle, optionally can be closed with a separate lid and has a spout (3), wherein the metering device as a movable part of a metering means comprises a movable metering piston (10) which has a lid (15) and a side wall (5) disposed on the side of the metering piston facing the container, **characterised in that** the metering device comprises a stationary cup (4), into which the metering piston (10) is inserted, wherein the metering means comprises a metering control chamber (64) having a variable volume, which metering control chamber (64) is in a pouring position above the lid (15) of the metering piston (10), wherein the metering control chamber (64) is designed to be filled from empty to full when the metering device is poured out, and wherein the metering control chamber (64) is delimited by two stationary walls (4, 24) and by two walls (10, 15) which can be displaced in the axial direction toward the nozzle **in that** there are two mutually parallel side walls (4; 10) extending axially toward the nozzle, wherein one side wall (10) is mounted opposite the other side wall (4) in the axial direction toward the nozzle, and formed by the side wall of the metering piston (10), and wherein the other stationary side wall (4) is formed by a circumferential wall of the cup, wherein the stationary side wall (4) on the side thereof facing the container forms a bottom wall (24) which protrudes at an angle thereto and connects to the movable side wall (15), and the movable side wall (15) on its end facing the mouth of the nozzle forms a cover wall which protrudes at an angle thereto, is formed by the lid (15) of the metering piston and which connects to the stationary side wall (4), wherein the variable volume enclosed by all four walls (4, 24; 10, 15) forms the metering control chamber (64), wherein the metering piston (10) is movable between an uppermost position and a lowermost position in the cup, wherein in the uppermost position of the metering piston (10) within the cup the lid (15) of the metering piston (10) rests on the bottom wall (24) of the metering control chamber (64) and the metering control chamber (64) is emptied, while the metering piston (10) is largely sealed with respect to the cup, wherein the metering control chamber (64) is fillable by increased pressure from the container or hose **in that** by movement of the metering piston (10) downwards and simultaneous dispensing the metered portion the metering piston (10) can be moved from the uppermost position to the lowermost position in the cup, wherein the lower edge of the metering piston (10) in the lowermost position thereof closes the spout (3), wherein the metering piston (10) can perform a pivoting movement in the lowermost position so that it is no longer sealed with respect to the cup, wherein by movement of the metering piston (10) upwards on account of negative pressure in the container or hose the metering piston (10) can again be moved from the lowermost position to the uppermost position in the cup.

3. The metering device according to claim 1, **characterised in that** the closure body (41) is cylindrical, for insertion into the interior of a nozzle, and the metering control chamber (64) inside the closure body (41) is asymmetrical **in that** its cross section at right angles to the cylindrical closure body (41) forms a segment of a circle, wherein the circular part is formed by the stationary side wall (54) of the closure body (41), and the secant by the displaceable side wall (60), and this displaceable side wall (60) with its two side edges is guided on the closure body (41) in grooves (59) extending axially with respect to the nozzle, and that on the side of the displaceable side wall (60) which faces away from the metering control chamber the closure body (41) down to at least one flow opening (57) connects to the displaceable side wall (60) and encloses a ventilation pipe (58) which extends in the axial direction and extends at least over the entire height of the closure body (41).

4. The metering device according to claim 3, **characterised in that** the closure body (41) can be inserted with its upper, circular edge into a spout attachment (40) which has a continuous disc (44) extending orthogonally to the axis of the closure body, having a spout hole (45) which is aligned with the spout hole (51) in the disc (50) on the closure body (41) after mounting of the spout attachment (40) on the closure body (41), while the disc (44) on the spout attachment (40) on the periphery thereof has a ventilation hole (46) which is aligned with the upper end of the ventilation pipe (58) on the closure body (41), and further that a spout beak (48) is integrally formed on the outside of the disc (44) of the spout attachment (40).

5. The metering device according to claim 1, **characterised in that** the closure body (41) on the side of the metering control chamber in the upper edge region along the circumference has at least one window (63), for quick filling of the metering control chamber (64) in the final phase of the filling thereof during dispensing of a metered portion, so that the cover wall (61) of the metering control chamber (64) closes the spout hole (51) in the disc (50).

6. The metering device according to one of claims 1 or 5, **characterised in that** the closure body (41) at the top has an edge which is circular up to the mouth of the ventilation pipe (58) and which can be inserted into a corresponding circular groove on the underside of the spout attachment (40) and can be snapped into said groove on moulded wall segments (47) using retaining means, wherein a cap is formed radially outside the disc (44), the circumferential wall (71) of which is equipped on the inside with an internal thread (42) or with a bead for screwing or snapping onto a container nozzle or hose nozzle to be equipped.

7. The metering device according to one of claims 1 to 6, **characterised in that** the closure body (41) consists of three parts (A, B and C), specifically a first part (A) having the stationary side wall (54) and the bottom wall (52), and said part (A) can be inserted into the nozzle of a container to be equipped **in that** same has a protruding edge (65) at the top and a circumferential wall (66) which projects downward at the periphery thereof and which is equipped with an internal thread (67), and that an adjusting ring (68) is placed on the upper end of said first part (A), which adjusting ring extends downwards on the inside of the first part (A) along the inner wall thereof, rests at the top on the edge (65) and on the outside bears with its own circumferential wall (69) against the circumferential wall (66) of the first part (A) and encloses same, and wherein said adjusting ring (68) is rotatable about the axis of the closure body, as a result of which a second part (B), which is disposed in the interior of the first part (A), can be displaced up or down in the axial direction via a helical guide groove **in that** the second part (B) cannot be rotated, wherein the stroke of the third part (C), specifically the displaceable side wall (60) with the cover wall (61), can be varied and thus the metered amount is continuously adjustable between a minimum and a maximum.

8. The metering device according to claim 7, **characterised in that** on the third part (C), specifically the displaceable side wall, an upwardly projecting extension (79) is integrally formed on the lower end thereof, which at the uppermost adjustment position of the second part (B) in the adjusting ring (68) encounters a stop on the first part (A), so that the cover wall (61) of the displaceable side wall (60) forms a spacing with respect to the spout hole (51) and allows a metered portion to be dispensed continuously.

9. The metering device according to claim 7 or 8, **characterised in that** a window (72) is created in the lid surface of the adjusting ring (68) to enable a view of the protruding edge (65) of the first part (A) which is disposed below the adjusting ring (68) and thus the adjustment position with respect to the first part (A) disposed therebelow can be displayed.

10. The metering device according to claim 2, **characterised in that** said metering device includes a closure body (1) having sealing closing means (7), wherein the metering means consists of only two components, specifically a hollow cup (4) which sits firmly in the closure body (1) and has a bottom (24) and a window (12) arranged on the bottom side of the cup (4) in the side wall thereof, for forming two stationary boundary walls (4, 24) of a metering control chamber (64), as well as a cap-like metering piston (10) having an extension (5, 11) extending on the top side of the cap in the axial direction, which metering piston (10) fits with the extension (5, 11) in the cup (4), and hereby the extension (5, 11) thereof covers the window (12) and thus forms two displaceable boundary walls (15, 5) of the metering control chamber (64), wherein the metering piston (10) in the cup (4) is axially movable and can be pivoted with the extension (5, 11) thereof to a limited degree against the outside of the window (12) so that in the pivoted-out state said metering piston forms an open valve with the cup (4) and the lower edge thereof overlaps the cup (4) by a distance (D2).

11. The metering device according to claim 10, ***characterised* in that** the cup (4) forms a hollow cylinder and that the cap-like metering piston (10) has a cylindrical shape, having an extension (5) which extends on the top side of the cap in the axial direction and which forms an extension of the cylindrical wall over an angular segment of 90° to 200°.

12. The metering device according to claim 10, ***characterised* in that** the cup (4) forms a hollow cylinder and that the cap-like metering piston (10) has a cylindrical shape, having an extension (11) which extends in the axial direction on the top side of the cap and which extends as a secant over the lid (15) of the cylindrical metering piston (10).

13. The metering device according to claim 11, ***characterised* in that** the window is formed on the cup (4) by cutting away the circumferential wall thereof on one side in the lower region of the cup and by reducing the bottom (13) of the cup (4) in radius on the outer edge accordingly by the wall thickness of the circumferential wall, wherein incisions (14) in wall thickness continue on the two sides into the bottom (13) a little way, and that the extension (5) on the lid (15) of the metering piston (10) forms a half cylinder, which closes said window when the extension (5) is disposed over the window.

14. The metering device according to claim 11, ***characterised* in that** the window on the cup (4) is formed by cutting away approximately up to half of the one side thereof in the bottom region of the cup, and **in that** the extension (11) on the lid (15) of the metering piston (10) is flat and is arranged in such a way that said window closes same when the extension (11) is over the window.

15. The metering device according to one of claims 2 or 10 to 14, ***characterised* in that** said metering device in the device body (1) includes a rotating body (2) comprising the cup (4) and the metering piston (10), said rotating body having a limiter (6) which projects beyond the cup bottom in the form of a continuously or discontinuously rising web (28) which with the extension (11) thereof forms a stop for the metering piston (10) which can be moved upwards in the cup (4), wherein the rotating body (2) in the device or closure body (1) can be rotated so that the extension (11) strikes with the upper edge thereof, according to the rotational position of the limiter (6), at various points on the underside of the web (28), and that the rotating body (2) has a radially protruding cam (24) on the circumference thereof which can be rotated back and forth on the device body or closure body (1) between two opposite, inwardly projecting stop cams (26, 27) so that the range of rotation of the rotating body (2) is delimited in a continuously adjustable manner between a setting for a maximum metered amount and a minimum metered amount.

## Revendications

1. Dispositif de dosage, conçu pour distribuer une portion de dosage à partir d'un récipient ou d'un tuyau avec une buse, comprenant un capuchon verseur (40) qui peut être vissé ou poussé sur la buse et éventuellement fermé avec un couvercle séparé, avec un corps de fermeture cylindrique (41) avec un trou verseur (51) maintenu dessus, qui contient une partie mobile (60, 61) constituée de deux parois pour distribuer la portion de dosage, la partie mobile ainsi que deux parois fixes (52, 54) du corps de fermeture (41) formant une chambre de commande de dosage (64) dans le corps de fermeture (41), qui est remplie de vide à pleine lors de la distribution d'une portion de dosage, **caractérisé en ce que** la chambre de commande de dosage (64) est formée et délimitée par deux parois fixes adjacentes (52, 54) du corps de fermeture (41), l'une (54) s'étend parallèlement à l'axe longitudinal du corps de fermeture (41) et forme avec l'autre paroi fixe (52) un angle d'au moins environ 90 ° et deux parois (60, 61) de la partie mobile, mobiles le long de l'axe longitudinal du corps de fermeture (41), qui forment un angle d'environ 90°, les deux parois mobiles (60, 61) au début d'une distribution de dose, étant éloignées au maximum du trou verseur (51), en une position de départ au sein de leur trajet de déplacement et peuvent être déplacées en direction du trou verseur (51) lorsque la portion de dosage est distribuée et l'une (61) des deux parois mobiles (60, 61) ferme le trou verseur (51) lorsque la chambre de commande de dosage est remplie, grâce à quoi la dose à distribuer est limitée et la chambre de commande de dosage après la distribution de la portion de dose peut être vidée en replaçant le dispositif de dosage dans une position verticale du récipient et en replaçant ainsi la partie mobile du corps de fermeture dans sa position de départ dans le récipient ou le tuyau.

2. Dispositif de dosage, conçu pour distribuer une portion de dosage à partir d'un récipient ou d'un tuyau avec une buse, le dispositif de dosage comprenant un corps de fermeture (1) avec un bec (3) qui peut être vissé ou poussé sur la buse, éventuellement fermé avec un couvercle séparé, le dispositif de dosage comprenant comme partie mobile d'un moyen de dosage, un piston de dosage mobile (10) qui a un couvercle (15) et une paroi latérale (5) se trouvant sur le côté du piston de dosage faisant face au récipient, **caractérisé en ce que** le dispositif de dosage comprend un gobelet fixe (4) dans lequel le piston de dosage (10) est inséré, le moyen de dosage comprenant une chambre de commande de dosage (64) à volume variable, laquelle chambre de commande de dosage (64) se trouve dans une position de versement au-dessus du couvercle (15) du piston de dosage (10), la chambre de commande de dosage (64) étant conçue pour être remplie de vide à pleine lors du vidage du dispositif de dosage et la chambre de commande de dosage (64) étant délimitée par deux parois fixes (4, 24) et deux parois (10, 15) qui peuvent être déplacées dans la direction axiale vers la buse de telle sorte que deux parois latérales (4; 10) parallèles, s'étendant axialement par rapport à la buse soient présentes, une paroi latérale (10) étant montée de façon à pouvoir être déplacée dans la direction axiale par rapport à la buse par rapport à l'autre paroi latérale (4) et étant formée par la paroi latérale du piston de dosage (10) et l'autre paroi latérale fixe (4) étant formée par une paroi périphérique du gobelet, la paroi latérale fixe (4) sur son côté faisant face au récipient formant une paroi de fond (24), dépassant de celui-ci selon un angle, qui jouxte la paroi latérale mobile (15) et la paroi latérale mobile (15) sur son extrémité faisant face à l'embouchure de la buse formant une paroi supérieure faisant saillie à un angle par rapport à celle-ci, qui est formée par le couvercle (15) du piston de dosage et qui jouxte la paroi latérale fixe (4), le volume variable formé par les quatre parois (4, 24 ; 10, 15) formant la chambre de commande de dosage (64), le piston de dosage (10) étant mobile entre une position la plus haute et une position la plus basse dans le gobelet, dans la position la plus haute du piston de dosage (10) à l'intérieur du gobelet, le couvercle (15) du piston de dosage (10) reposant sur la paroi de fond (24) de la chambre de commande de dosage (64) et la chambre de commande de dosage (64) est vidée tandis que le piston de dosage (10) est en grande partie scellé contre le gobelet, la chambre de commande de dosage (64) pouvant être remplie par une pression accrue du récipient ou du tuyau, en déplaçant le piston de dosage (10) de la position la plus haute à la position la plus basse dans le gobelet par mouvement vers le bas et distribution simultanée de la portion de dosage, le bord inférieur du piston de dosage (10) fermant le bec (3) dans sa position la plus basse, dans lequel le piston de dosage (10) peut effectuer un mouvement de pivotement dans sa position la plus basse de sorte qu'il ne soit plus scellé au gobelet, le piston de dosage (10) se déplaçant à nouveau de la position la plus basse à la position la plus haute dans le gobelet par mouvement vers le haut du piston de dosage (10) en raison d'une pression négative dans le récipient ou le tuyau.

3. Dispositif de dosage selon la revendication 1, **caractérisé en ce que** le corps de fermeture (41) est cylindrique, destiné à être utilisé à l'intérieur d'une buse et la chambre de commande de dosage (64) à l'intérieur du corps de fermeture (41) est conçue asymétrique **en ce que** sa section transversale perpendiculaire au corps de fermeture cylindrique (41) forme un segment de cercle, la partie circulaire étant formée par la paroi latérale fixe (54) du corps de fermeture (41) et la sécante par la paroi latérale mobile (60) et cette paroi latérale mobile (60) avec ses deux bords latéraux est guidée dans des rainures (59) sur le corps de fermeture (41), qui s'étendent axialement vers la buse et **en ce que** sur le côté de la paroi latérale mobile (60), qui est opposé à la chambre de commande de dosage, le corps de fermeture (41) est connecté à la paroi latérale mobile (60) vers le bas jusqu'à au moins une ouverture d'écoulement (57) et comprend un tuyau de ventilation (58) s'étendant dans la direction axiale et s'étendant au moins sur toute la hauteur du corps de fermeture (41).

4. Dispositif de dosage selon la revendication 3, **caractérisé en ce que** le corps de fermeture (41) peut être inséré avec son bord circulaire supérieur dans un capuchon verseur (40), qui a un disque continu (44) s'étendant orthogonalement à l'axe du corps de fermeture, avec un trou de bec (45), qui est aligné avec le trou verseur (51) dans le disque (50) sur le corps de fermeture (41) après le support du capuchon verseur (40) sur le corps de fermeture (41), tandis que le disque (44) sur le capuchon verseur (40) présente sur sa périphérie un trou de ventilation (46), qui affleure avec l'extrémité supérieure du tube de ventilation (58) sur le corps de fermeture (41) et en outre **en ce qu'**un bec verseur (48) est formé sur l'extérieur du disque (44) du capuchon verseur (40).

5. Dispositif de dosage selon la revendication 1, **caractérisé en ce que** le corps de fermeture (41) sur le côté de la chambre de commande de dosage dans la région de bord supérieur le long de la circonférence a au moins une fenêtre (63) pour remplir soudainement la chambre de commande de dosage (64) dans la phase finale de son remplissage lors de la distribution d'une portion de dosage de sorte que la paroi supérieure (61) de la chambre de commande de dosage (64) ferme le trou verseur (51) dans le disque (50).

6. Dispositif de dosage selon l'une des revendications 1 ou 5, **caractérisé en ce que** le corps de fermeture (41) présente en haut un bord qui est circulaire à l'exception de l'embouchure du tube de ventilation (58), qui peut être inséré dans une rainure circulaire correspondante sur la face inférieure du capuchon verseur (40) et peut être encliqueté sur des segments de paroi moulés (47) avec des moyens de retenue, un capuchon étant formé radialement à l'extérieur du disque (44), dont la paroi périphérique (71) est équipée à l'intérieur d'un filetage intérieur (42) ou d'un bourrelet, pour visser ou pousser sur une buse à fixer d'un récipient ou d'un tuyau.

7. Dispositif de dosage selon l'une des revendications 1 à 6, **caractérisé en ce que** le corps de fermeture (41) est constitué de trois parties (A, B et C), à savoir une première partie (A) avec la paroi latérale fixe (54) et la paroi de fond (52) et cette partie (A) peut être insérée dans la buse d'un récipient à équiper, **en ce qu'**elle présente un bord en porte-à-faux (65) en haut et une paroi périphérique (66) faisant saillie vers le bas sur sa périphérie, qui est équipée d'un filetage intérieur (67) et **en ce qu'**une bague de réglage (68) est placée à l'extrémité supérieure de cette première partie (A), qui s'étend vers le bas à l'intérieur de la première partie (A) le long de sa paroi intérieure, repose au-dessus sur le bord (65) et à l'extérieur avec une propre paroi périphérique (69) sur la paroi périphérique (66) de la première partie (A) et la comprend et dans lequel cette bague de réglage (68) peut tourner autour de l'axe du corps de fermeture, moyennant quoi une deuxième partie (B), qui est située à l'intérieur de la première partie (A), peut être déplacée vers le haut ou vers le bas dans le sens axial via une rainure de guidage hélicoïdale, **en ce que** la deuxième partie (B) ne peut pas être tournée, la course de la troisième partie (C), à savoir la paroi latérale mobile (60) avec la paroi supérieure (61) est variable et donc la dose est réglable en continu entre un minimum et un maximum.

8. Dispositif de dosage selon la revendication 7, **caractérisé en ce qu'**une extension en saillie vers le haut (79) est formée sur la troisième partie (C), à savoir la paroi latérale mobile, à son extrémité inférieure, qui, dans la position de réglage la plus haute de la deuxième partie (B) dans la bague de réglage (68) trouve une butée sur la première partie (A), de sorte que la paroi supérieure (61) de la paroi latérale mobile (60) forme une distance par rapport au trou verseur (51) et permet à une portion de dosage d'être distribuée en continu.

9. Dispositif de dosage selon la revendication 7 ou 8, **caractérisé en ce qu'**une fenêtre (72) est évidée dans la surface supérieure de la bague de réglage (68), dans le but de libérer la vue du bord en porte-à-faux (65) de la première partie (A) sous la bague de réglage (68) et donc la position de réglage par rapport à la première partie (A) sous-jacente peut être affichée.

10. Dispositif de dosage selon la revendication 2, **caractérisé en ce qu'**il comprend un corps de fermeture (1) avec des moyens de fermeture étanches (7), les moyens de dosage consistant en seulement deux composants, à savoir un gobelet creux (4) avec un fond (24), qui repose fermement dans le corps de fermeture (1) et sur le côté inférieur du gobelet (4), une fenêtre (12) agencée dans sa paroi latérale, pour former deux parois limites fixes (4, 24) d'une chambre de commande de dosage (64) et un piston de dosage en forme de capuchon (10) avec une extension (5, 11) s'étendant en direction axiale sur la face supérieure du capuchon, lequel piston de dosage (10) avec extension (5, 11) s'insère dans le gobelet (4) et son extension (5, 11) recouvre et ferme la fenêtre (12) et forme ainsi deux parois limites mobiles (15, 5) de la chambre de commande de dosage (64), le piston de dosage (10) dans le gobelet (4) étant mobile axialement et pouvant pivoter de manière limitée avec son extension (5, 11) contre la face extérieure de la fenêtre (12), de sorte que lorsqu'elle est basculée, elle forme une valve ouverte avec le gobelet (4) et son bord inférieur chevauche le gobelet (4) d'une distance (D2).

11. Dispositif de dosage selon la revendication 10, ***caractérisé* en ce que** le gobelet (4) forme un cylindre creux et **en ce que** le piston de dosage en forme de capuchon (10) a une forme cylindrique, avec une extension (5) s'étendant sur le dessus du capuchon dans la direction axiale, qui forme un prolongement de la paroi cylindrique sur un segment angulaire de 90 ° à 200 °.

12. Dispositif de dosage selon la revendication 10, ***caractérisé* en ce que** le gobelet (4) forme un cylindre creux et **en ce que** le piston de dosage en forme de capuchon (10) a une forme cylindrique, avec une extension (11) qui s'étend dans la direction axiale sur le dessus du capuchon et qui s'étend comme une sécante sur le couvercle (15) du piston de dosage cylindrique (10).

13. Dispositif de dosage selon la revendication 11, ***caractérisé* en ce que** la fenêtre sur le gobelet (4) est formée en coupant sa paroi périphérique d'un côté dans la zone inférieure du gobelet et le fond (13) du gobelet (4) a un rayon réduit sur le bord extérieur correspondant à l'épaisseur de paroi de la paroi périphérique, des incisions (14) dans l'épaisseur de paroi se poursuivant des deux côtés dans le fond (13) et **en ce que** l'extension (5) sur le couvercle (15) du piston de dosage (10) forme un demi-cylindre qui ferme cette fenêtre dans l'état où l'extension (5) se trouve au-dessus de la fenêtre.

14. Dispositif de dosage selon la revendication 11, ***caractérisé* en ce que** la fenêtre sur le gobelet (4) est formée en coupant environ la moitié de son côté dans la zone inférieure du gobelet et **en ce que** l'extension (11) sur le couvercle (15) du piston de dosage (10) est plate et est agencée de telle sorte que celle-ci ferme cette fenêtre en l'état où l'extension (11) se trouve au-dessus de la fenêtre.

15. Dispositif de dosage selon l'une des revendications 2 ou 10 à 14, ***caractérisé* en ce qu'**il comprend dans le corps de dispositif (1) un corps rotatif (2) comprenant le gobelet (4) et le piston de dosage (10), qui présente un limiteur (6) sous la forme d'une bande (28) à croissance constante ou discontinue, qui forme une butée pour le piston de dosage (10) qui peut être déplacé vers le haut dans le gobelet (4) avec son extension (11), le corps rotatif (2) pouvant être tourné dans le dispositif ou le corps de fermeture (1) de sorte que l'extension (11) frappe avec son bord supérieur en fonction de la position de rotation du limiteur (6) en divers points sur la face inférieure de la bande (28) et que le corps rotatif (2) présente sur sa circonférence une came (24) dépassant radialement, qui peut être tournée d'avant en arrière entre deux cames d'arrêt opposées se projetant vers l'intérieur (26, 27) sur le corps de dispositif ou le corps de fermeture (1), de sorte que la plage de rotation du corps rotatif (2) soit réglable en continu entre un réglage pour une dose maximale et une dose minimale.
